# EUROPEAN PATENT APPLICATION

(11) **EP 4 557 807 A1**
(43) Date of publication of application: **21.05.2025**
(21) Application number: 24213645.5
(22) Date of filing: 18.11.2024
(51) Int. Cl.: H04W 24/02, H04W 88/08

(54) **METHOD TO DETECT STALE UES IN DIFFERENT RAN NODES**

(30) Priority: 17.11.2023 IN 202321078359; 12.11.2024 US 202418944156
(71) Applicant: Mavenir Systems, Inc., Richardson, TX 75081 (US)
(72) Inventor: KAUL, Suveer, 560064 Bangalore (IN); S., Srinivasan, 560037 Bangalore (IN); INGALE, Mangesh Abhimanyu, 411060 Pune (IN); MITTAL, Satish Kumar, 122018 Gurgaon (IN)
(74) Representative: dompatent von Kreisler Selting Werner - Partnerschaft von Patent- und Rechtsanwälten mbB

(57) **Abstract**

A method for detecting stale UEs in O-RAN systems based on combining information derivable from the Radio Intelligent Controller consisting in a radio intelligent controller (RIC) polling a centralized unit control plane (CU-CP), a centralized unit user plane (CU-UP), and a distributed unit (DU) to receive information regarding allocated RAN resources associated with a user equipment (UE); and correlating, by the RIC, the received information regarding the allocated RAN resources associated with the UE to determine whether the CU-CP, CU-UP and DU are in sync with respect to the allocated RAN resources associated with the UE. A discrepancy in the allocated RAN resources among the CU-CP, CU-UP and DU indicates stale RAN resource allocation by at least one of the CU-CP, CU-UP and DU.

## Description

### BACKGROUND OF THE DISCLOSURE

### 1. Field of the Disclosure

The present disclosure is related to 4G and/or 5G wireless networks, and relates more particularly to optimized method and apparatus to detect and correct resource allocation mismatch in different radio access network (RAN) nodes, e.g., Open Radio Access Network (O-RAN) nodes.

### 2. Description of Related Art

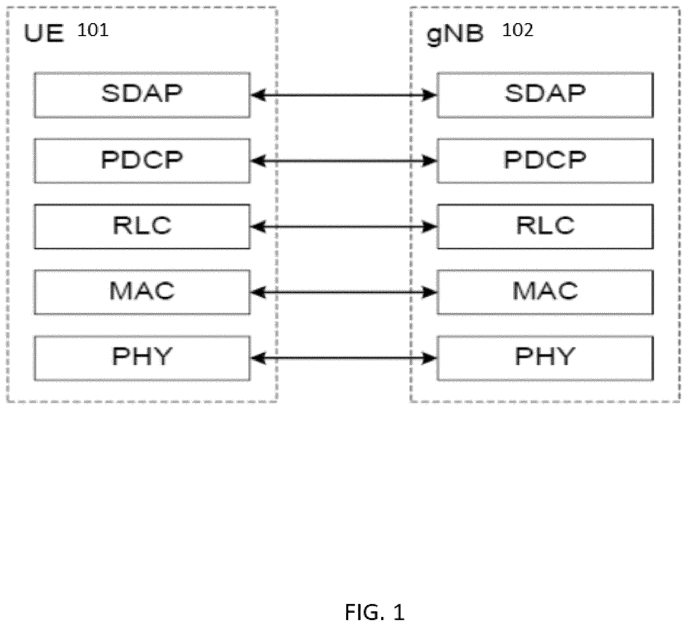

In the following sections, an overview of Next Generation Radio Access Network (NG-RAN) architecture and 5G New Radio (NR) stacks will be discussed. 5G NR (New Radio) user and control plane functions with monolithic gNB (gNodeB) are shown in FIGS. 1, 2 and 3. For the user plane (shown in FIG. 1, which is in accordance with 3GPP TS 38.300), PHY (physical), MAC (Medium Access Control), RLC (Radio Link Control), PDCP (Packet Data Convergence Protocol) and SDAP (Service Data Adaptation Protocol) sublayers originate in the UE 101 and are terminated in the gNB 102 on the network side.

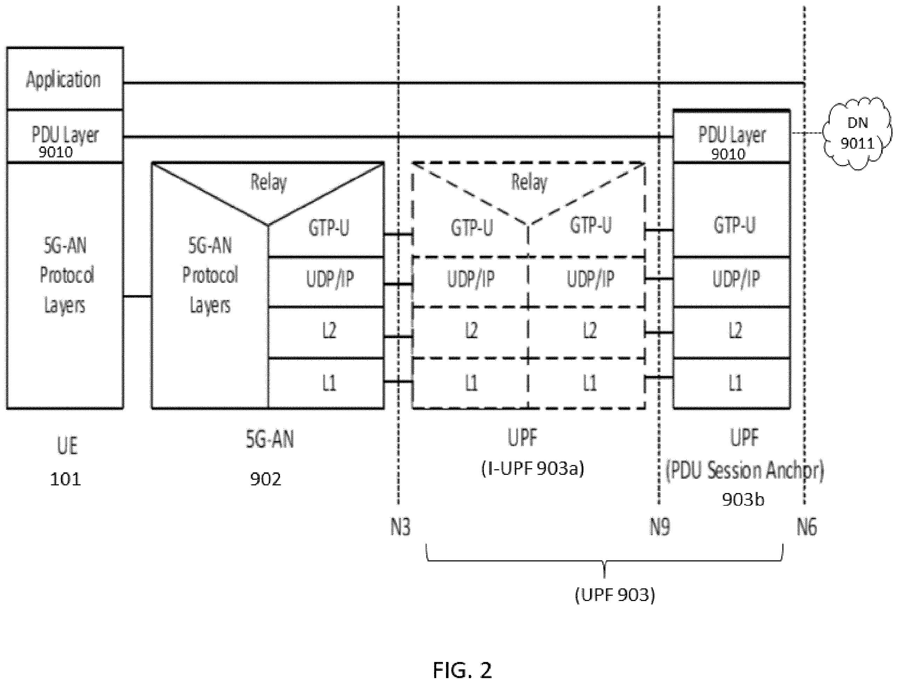

In addition, as shown in FIG. 2 (which is accordance with 3GPP TS 23.501), which is a block diagram illustrating the user plane protocol stacks for a PDU session of 5G NR, the Protocol Data Unit (PDU) layer 9010 corresponds to the PDU carried between the user equipment (UE) 101 and the data network (DN) 9011 over the PDU session. As shown in FIG. 2, UE 101 is connected to the 5G access network (AN) 902, which AN 902 is in turn connected via the N3 interface to the Intermediate UPF (I-UPF) 903a portion of the UPF 903, which I-UPF 903a is in turn connected via the N9 interface to the PDU session anchor 903b portion of the UPF 903, and which PDU session anchor 903b is connected to the DN 9011. The PDU session can correspond to Internet Protocol version 4 (IPv4), IPv6, or both types of IP packets (IPv4v6). General Packet Radio Services (GPRS) Tunneling Protocol - User Plane (GTP-U) shown in FIG. 2 supports tunnelling user plane data over N3 and N9 interfaces and provides encapsulation of end user PDUs for N3 and N9 interfaces.

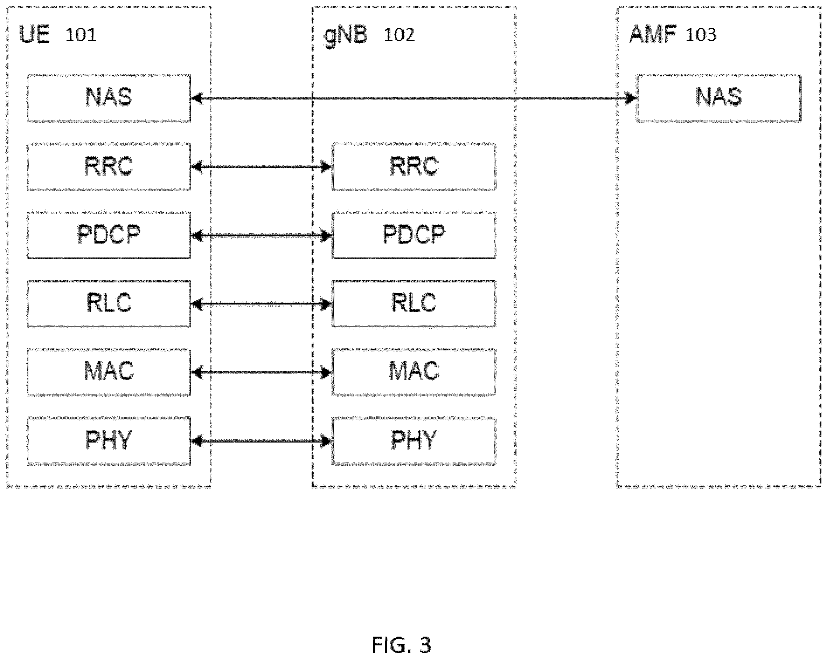

For the control plane (shown in FIG. 3, which is in accordance with 3GPP TS 38.300), RRC (Radio Resource Control), PDCP, RLC, MAC and PHY sublayers originate in the UE 101 and are terminated in the gNB 102 on the network side, and NAS (Non-Access Stratum) originate in the UE 101 and is terminated in the AMF (Access Mobility Function) 103 on the network side.

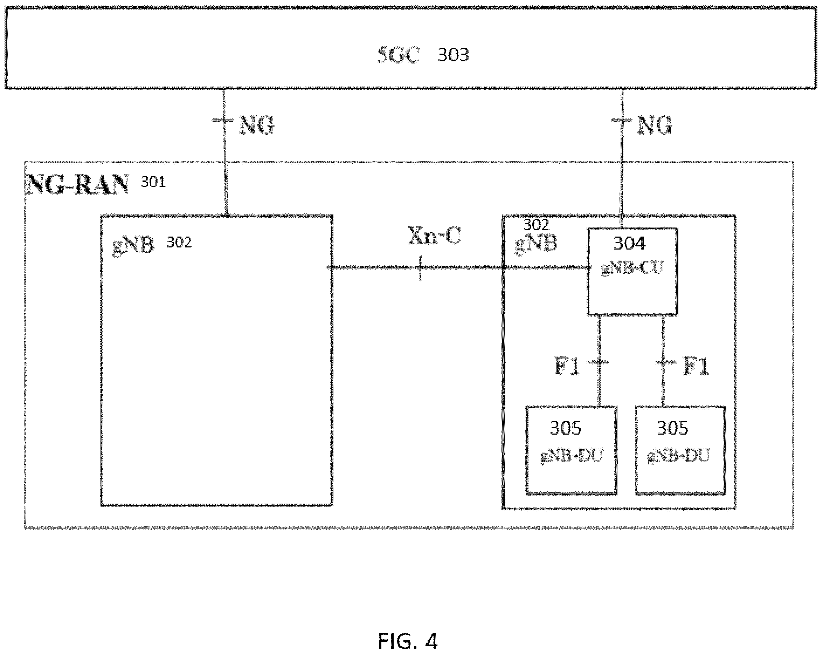

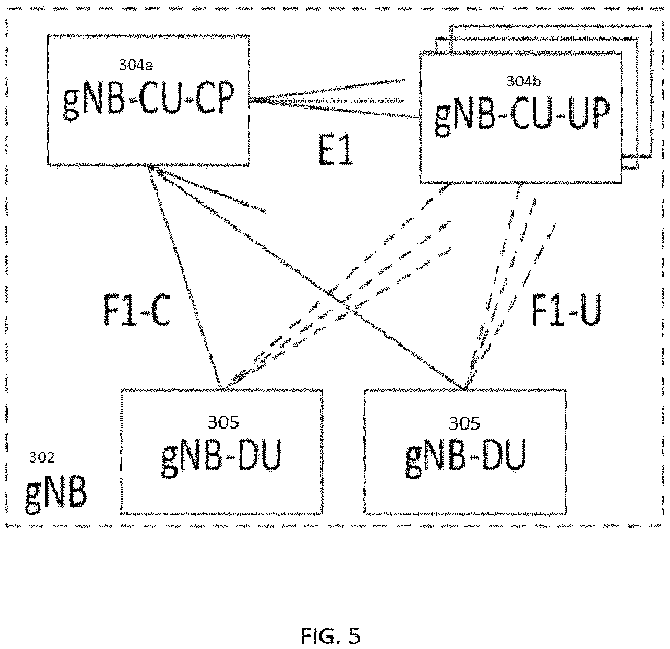

NG-Radio Access Network (NG-RAN) architecture from 3GPP TS 38.401 is shown in FIGS. 4-5. As shown in FIG. 4, the NG-RAN consists of a set of gNBs connected to the 5GC through the NG interface. As shown in FIG. 4, the NG-RAN 301 consists of a set of gNBs 302 connected to the 5GC 303 through the NG interface. Each gNB comprises gNB-CU 304 and one or more gNB-DU 305 (see FIG. 4). As shown in FIG. 5 (which illustrates separation of CU-CP (CU-Control Plane) and CU-UP (CU-User Plane)), E1 is the interface between gNB-CU-CP (CU-Control Plane) 304a and gNB-CU-UP (CU-User Plane) 304b, F1-C is the interface between gNB-CU-CP 304a and gNB-DU 305, and F1-U is the interface between gNB-CU-UP 304b and gNB-DU 305. As shown in FIG. 5, gNB 302 can consist of a gNB-CU-CP 304a, multiple gNB-CU-UPs (or gNB-CU-UP instances) 304b and multiple gNB-DUs (or gNB-DU instances) 305. One gNB-DU 305 is connected to only one gNB-CU-CP 304a, and one gNB-CU-UP 304b is connected to only one gNB-CU-CP 304a.

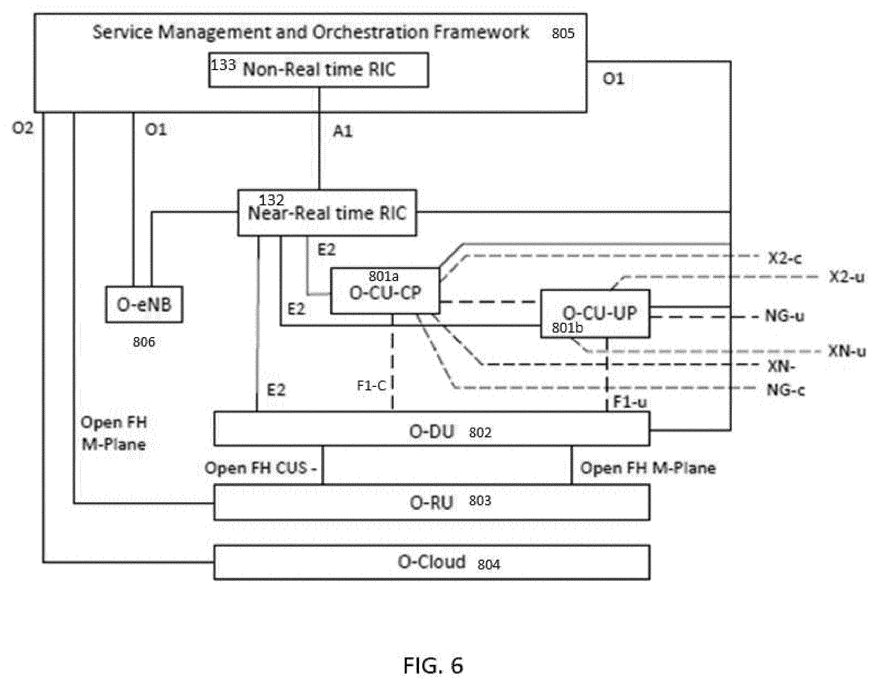

Open Radio Access Network (O-RAN) is based on disaggregated components which are connected through open and standardized interfaces based on 3GPP NG-RAN. An overview of O-RAN with disaggregated RAN CU (Centralized Unit), DU (Distributed Unit), and RU (Radio Unit), near-real-time Radio Intelligent Controller (Near-RT RIC) and non-real-time RIC (Non-RT RIC) is illustrated in FIG. 6.

As shown in FIG. 6, the CU (shown split as O-CU-CP 801a and O-CU-UP 801b) and the DU (shown as O-DU 802) are connected using the F1 interface (with F1-C for control plane and F1-U for user plane traffic) over a mid-haul (MH) path. One DU can host multiple cells (e.g., one DU could host 24 cells) and each cell may support many users. For example, one cell may support 800 Radio Resource Control (RRC)-connected users and out of these 800, there may be 250 Active users (i.e., users that have data to send at a given point of time).

A cell site can comprise multiple sectors, and each sector can support multiple cells. For example, one site could comprise three sectors and each sector could support eight cells (with eight cells in each sector on different frequency bands). One CU-CP (CU-Control Plane) could support multiple DUs and thus multiple cells. For example, a CU-CP could support 1,000 cells and around 100,000 User Equipments (UEs). Each UE could support multiple Data Radio Bearers (DRB) and there could be multiple instances of CU-UP (CU-User Plane) to serve these DRBs. For example, each UE could support 4 DRBs, and 400,000 DRBs (corresponding to 100,000 UEs) may be served by five CU-UP instances (and one CU-CP instance).

The DU could be located in a private data center, or it could be located at a cell-site. The CU could also be in a private data center or even hosted on a public cloud system. The DU and CU, which are typically located at different physical locations, could be tens of kilometers apart. The CU communicates with a 5G core system, which could also be hosted in the same public cloud system (or could be hosted by a different cloud provider). A RU (Radio Unit) (shown as O-RU 803 in FIG. 6) is located at a cell-site and communicates with the DU via a front-haul (FH) interface.

The E2 nodes (CU and DU) are connected to the near-real-time RIC 132 using the E2 interface. The E2 interface is used to send data (e.g., user and/or cell KPMs) from the RAN, and deploy control actions and policies to the RAN at near-real-time RIC 132. The applications or services at the near-real-time RIC 132 that deploys the control actions and policies to the RAN are called xApps. During the E2 setup procedures, the E2 node advertises the metrics it can expose, and an xApp in the near-RT RIC can send a subscription message specifying key performance metrics which are of interest. The near-real-time RIC 132 is connected to the non-real-time RIC 133 (which is shown as part of Service Management and Orchestration (SMO) Framework 805 in FIG. 6) using the A1 interface. The applications that are hosted at non-RT-RIC are called rApps. Also shown in FIG. 6 are O-eNB 806 (which is shown as being connected to the near-real-time RIC 132 and the SMO Framework 805) and O-Cloud 804 (which is shown as being connected to the SMO Framework 805).

The E2 interface specifications facilitate the following:
a) connectivity between Near-RT RIC and E2 Node supplied by different vendors;
b) exposure of selected E2 Node data (e.g., configuration information (cell configuration, supported slices, PLMNs, etc.), network measurements, context information, etc.) towards the Near-RT RIC; and
c) enablement of the Near-RT RIC to control selected functions on the E2 Node.
The E2 interface functions are grouped into the following categories: i) Near-RT RIC services; and ii) Near-RT RIC support functions.

Near-RT RIC services: Near-RT RIC can use the following RIC services provided by an E2 node:
i) REPORT: Near-RT RIC uses an RIC Subscription message to request that E2 Node send a REPORT message to Near-RT RIC and the associated procedure continues in the E2 Node after each occurrence of a defined RIC Subscription procedure Event Trigger.
ii) INSERT: Near-RT RIC uses an RIC Subscription message to request that E2 Node send an INSERT message to Near-RT RIC and suspends the associated procedure in the E2 Node after each occurrence of a defined RIC Subscription procedure Event Trigger.
iii) CONTROL: Near-RT RIC sends a CONTROL message to E2 Node to initiate a new associated procedure or resume a previously suspended associated procedure in the E2 Node.
iv) POLICY: Near-RT RIC uses an RIC Subscription message to request that E2 Node executes a specific POLICY during functioning of the E2 Node after each occurrence of a defined RIC Subscription procedure Event Trigger.

Near-RT RIC support functions include: i) Interface Management (E2 Setup, E2 Reset, E2 Node Configuration Update, E2 Removal, Reporting of General Error Situations); and ii) Near-RT RIC Service Update, i.e., an E2-Node-initiated procedure to inform Near-RT RIC of changes to the list of supported Near-RT RIC services and mapping of services to functions.

In this section, O-RAN specified E2 service models will be discussed. A given RAN Function offers a set of services to be exposed over the E2 (REPORT, INSERT, CONTROL and/or POLICY) using E2AP. These services are offered using following service models:
a) E2SM-NI: RAN Function NI ("Network Interface") performs the following functionalities:
   i) exposure of Network Interfaces;
   ii) modification of both incoming and outgoing network interface message contents; and
   iii) execution of policies that may result in change of network behaviour.
b) E2SM-KPM: RAN function KPM ("KPM Monitor") performs the following functionalities:
   i) exposure of O-DU's cell related performance IEs through periodic KPM Report;
   ii) exposure of O-CU-CP's cell-related and/or UE-related performance IEs through periodic KPM Report; and
   iii) exposure of O-CU-UP's bearer related performance IEs through periodic KPM Report.
c) E2SM-RC: RAN function RC ("RAN Control") performs the following functionalities:
   i) exposure of RAN control and UE context related information;
   ii) modification and initiation of RAN-control-related call processes and messages; and
   iii) execution of policies that may result in change of RAN control behavior.
d) E2SM-CCC: RAN function CCC ("Cell Configuration and Control") performs the following functionalities:
   i) exposure of node level and cell level configuration information; and
   ii) initiate control and/or configuration of node-level and cell-level parameters.

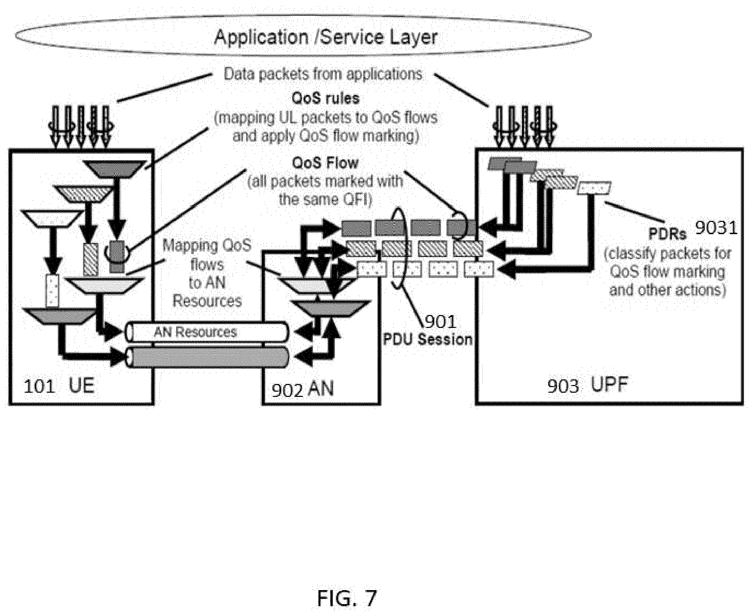

In this section, PDU sessions, DRBs, and quality of service (QoS) flows will be discussed. In 5G networks, PDU connectivity service is a service that provides exchange of PDUs between a UE and a data network identified by a Data Network Name (DNN). The PDU Connecitivity service is supported via PDU sessions that are established upon request from the UE. The DNN defines the interface to a specific external data network. One or more QoS flows can be supported in a PDU session. All the packets belonging to a specific QoS flow have the same 5QI (5G QoS Identifier). A PDU session consists of the following: Data Radio Bearer which is between UE and CU in RAN; and an NG-U GTP tunnel which is between CU and UPF (User Plane Function) in the core network. FIG. 7 illustrates an example PDU session (in accordance with 3GPP TS 23.501) consisting of multiple DRBs, where each DRB can consist of multiple QoS flows. In FIG. 7, three components are shown for the PDU session 901: UE 101; access network (AN) 902; and UPF 903, which includes Packet Detection Rules (PDRs) 9031.

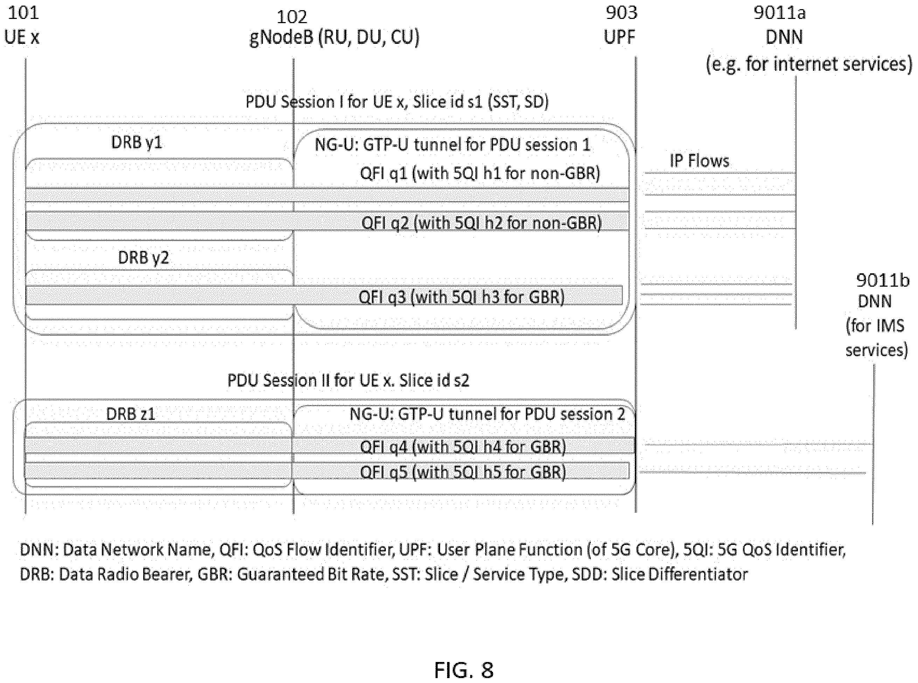

The following should be noted for 3GPP 5G network architecture, which is illustrated in FIG. 8 (in the context of multiple PDU sessions involving multiple DRBs and QoS Flow Identifiers (QFIs), which PDU sessions are implemented involving UE 101, gNodeB 102, UPF 903, and DNNs 9011a and 9011b):
1) The transport connection between the base station (i.e., CU-UP of gNodeB 102) and the UPF 903 uses a single GTP-U tunnel per PDU session, as shown in FIG. 8. The PDU session is identified using GTP-U TEID (Tunnel Endpoint Identifier).
2) The transport connection between the DU and the CU-UP uses a single GTP-U tunnel per DRB.
3) SDAP:
   a) The SDAP (Service Adaptation Protocol) Layer receives downlink data from the UPF 903 across the NG-U interface.
   b) The SDAP maps one or more QoS Flow(s) onto a specific DRB.
   c) The SDAP header is present between the UE 101 and the CU (when reflective QoS is enabled), and includes a field to identify the QoS flow within a specific PDU session.
4) GTP-U protocol includes a field to identify the QoS flow and is present between CU-UP and UPF 903 (in the core network).
FIG. 8 illustrates multiple PDU sessions involving multiple DRBs and QoS Flow Identifiers (QFIs).

In this section, UE context management will be briefly discussed. Among the possible functional splits for 5G NR and/or O-RAN, in Split 2 deployment mode, gNB comprises CU-CP and one or more CU-UPs and DUs (see, e.g., the gNB architecture in FIGS. 4 and 5). When a user (i.e., UE) is admitted into a gNB, a UE context is created for the user in all the RAN nodes, i.e., CU-CP, CU-UP and DU. RAN can support different types of UE contexts, e.g., UE context for users in i) RRC-connected mode, and ii) RRC-inactive mode. Information related to the UE is stored in the UE context, e.g., PDU session, DRB, QoS Flow, GTP TNL for various interfaces, Slice information, current state of the UE, etc. Note that the level of information stored for RRC-connected users is higher than that of RRC-inactive users. UE Finite State Machine (FSM) is used to manage the different state event combinations of the UE. UE context exists in the RAN nodes until the call is released.

Because UE context exists in all RAN nodes until the call is released, in an ideal scenario, when the call is released, UE context is deleted in all the nodes. However, at times the UE context deletion may not occur at all the nodes for various reasons, e.g., software bugs, memory exhaustion, link failures, packet loss on external or internal links, synchronization issues between active and standby nodes, etc. Due to such issues, there is a high possibility that stale UE context may remain in some nodes. Over a period of time, the number of stale UEs in the node can grow to the extent that all resources are exhausted, and thereby cause critical service outages. Occurrence of similar mismatch is possible for other resources such as PDU session, DRB, and/or QoS Flow, which can negatively impact service if RAN nodes are not able to allocate any of the above mentioned resources.

Accordingly, there is a need for an improved system and method for RAN resource (e.g., UE context) mismatch management in 5G networks.

### SUMMARY

Accordingly, what is desired is an improved system and method for RAN resource UE context) mismatch management in 5G networks.

According to a first example embodiment of the system and method according to the present disclosure, an RIC-based technique is utilized to detect and clean up stale RAN resources.

According to a first variant of the first example system and method, Non-RT RIC can periodically poll the RAN nodes (e.g., CU-CP, CU-UP and DU of gNB) via a management interface (e.g., as implemented by network management system (NMS)) to get the information about the allocated UE contexts. In response to the allocated UE context request, along with other information, RAN nodes can include the application protocol identity (AP ID) for respective protocol interfaces between the respective RAN nodes. Using the AP ID as well as other information received for different interfaces from CU-CP, CU-UP and DU, the Non-RT RIC can correlate the received information to determine whether all nodes are in sync or not. After stale UE contexts are identified, Non-RT RIC can send a trigger to respective Network function(s) to perform the necessary clean-up. The clean-up command should include gNB ID, NF ID and a list of AP IDs for the node (e.g., CU-UP or CU-CP) to identify and delete the stale user context(s).

According to a second variant of the first example system and method, telemetry data are used as tracing information to detect whether any of the RAN nodes has stale UE context(s). RAN nodes report tracing data to the RIC (e.g., Near-RT RIC). Apart from standard 3GPP trace events, internal events such as UE context allocation and UE context release can be traced by RAN nodes. 3GPP trace events and internal trace events from CU-CP, CU-UP and DU nodes can be monitored by the RIC (e.g., Near-RT RIC) to determine whether all nodes in the gNB have cleaned up the UE context or not. After stale UE contexts are identified, Near-RT RIC can send a trigger to respective network function(s) to perform the necessary clean-up.

According to a third variant of the first example system and method, a stale UE context can be detected based on performance measurement (PM) counters the RIC (e.g., Non-RT RIC) receives from RAN nodes. Because i) the number of UEs (connected) at CU-CP should be equal to the number of UEs across all DUs served by CU-CP, and ii) the number of UEs (connected or inactive) at CU-CP should be equal to the number of UEs across all CU-UPs served by CU-CP, if any discrepancy is found between the number of connected UEs reported by different nodes and the discrepancy continues to be present for multiple PM counter collection intervals, it can be treated as a stale UE condition.

According to a fourth variant of the first example system and method, standard 3GPP events and internal events (e.g., UE context allocation and UE context release) from different E2 nodes (CU-CP, CU-UP and/or DU) can be monitored by Near-RT RIC to detect stale context in real time. Near-RT RIC and E2 nodes can utilize report services to obtain information regarding i) specific events such as Initial UL RRC Message, Incoming Xn/NG HO Request, UE Context Release Request, and Bearer Context Release Request, etc., and/or ii) UE Context Management and Bearer Context Management call process types. Based on the information received from the E2 nodes, corrective action can be triggered immediately or additional steps taken to clear the stale UE contexts.

According to a second example embodiment of the method, a procedure to detect and clean up stale resources based on Resource Status Reporting is implemented. By adding new, additional IEs to existing Resource Status Reporting messages, the CU-CP can request status reports for user and/or bearer session contexts periodically from CU-UP and DU, and an audit can be performed based on some configured thresholds, e.g., when the number of connected UEs in a given cell is greater than 75%. Using this information from other nodes (CU-UP and DU), CU-CP can ensure that all nodes are in sync. In case some stale contexts are found, a clean-up of stale contexts can be performed.

According to a third example embodiment of the method, the DU sends the UE CONTEXT RELEASE REQUEST to the CU-CP to release the UE-associated logical F1-connection. The UE CONTEXT RELEASE REQUEST also includes a cause. In response, the CU-CP initiates the UE CONTEXT RELEASE by sending UE CONTEXT RELEASE COMMAND to the DU. The DU subsequently sends UE CONTEXT RELEASE COMPLETE message to gNB-CU-CP to report the completion of the UE context release.

In the present disclosure, system and/or network components (e.g., RIC (including Non-RT RIC and Near-RT RIC), gNB-CU (including gNB-CU-CP and gNB-CU-UP), gNB-DU, etc.) can be implemented as i) software executed on processor(s) and/or servers, and/or ii) dedicated hardware modules comprising processor(s) executing software, to implement the respective functionalities of the system and/or network components.

For this application, the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

### DESCRIPTION OF THE DRAWINGS

FIG. 1 is a block diagram illustrating the user plane stack of 5G NR.
FIG. 2 is a block diagram illustrating the user plane protocol stacks for a PDU session of 5GNR.
FIG. 3 is a block diagram illustrating the control plane stack of 5GNR.
FIG. 4 is a block diagram illustrating NG-RAN architecture.
FIG. 5 is a block diagram illustrating separation of CU-CP and CU-UP in NG-RAN architecture.
FIG. 6 illustrates an overview of O-RAN architecture.
FIG. 7 illustrates an example of PDU session consisting of multiple DRBs.
FIG. 8 illustrates example of multiple PDU sessions consisting of multiple DRBs and QFIs.
FIG. 9 is a block diagram illustrating an example system and method corresponding to Method 1A for handling stale RAN resources.
FIG. 10 is a block diagram illustrating an example system and method corresponding to Method 1A for handling stale RAN resources, which method includes data analysis.
FIG. 11 is a block diagram illustrating various information items analyzed in Method 1A for handling state RAN resources.
FIG. 12 is a block diagram illustrating the overall system architecture involved in application of Method 1A to Non-Standalone (NSA) deployments to find the stale UE contexts across eNB and gNB.
FIG. 13 is a block diagram illustrating the overall system architecture involved in application of Method 1D for handling state RAN resources.
FIG. 14 illustrates RESOURCE STATUS RESPONSE sent to CU-CP from DU, as part of Method 2.
FIG. 15 illustrates RESOURCE STATUS UPDATE sent to CU-CP from DU, as part of Method 2.
FIG. 16 illustrates RESOURCE STATUS RESPONSE sent to CU-CP from CU-UP, as part of Method 2.
FIG. 17 illustrates RESOURCE STATUS UPDATE sent to CU-CP from CU-UP, as part of Method 2.
FIG. 18 illustrates UE CONTEXT RELEASE REQUEST sent to the CU-CP from DU, as part of Method 3.
FIG. 19 illustrates UE CONTEXT RELEASE COMMAND sent to DU from CU-CP, as part of Method 3.
FIG. 20 illustrates CU-UP sending the Bearer Context Release Request to CU-CP, as part of Method 3.
FIG. 21 illustrates CU-CP sending the Bearer Context Release Command to CU-UP, as part of Method 3.

### DETAILED DESCRIPTION

Method 1 - RIC-based method (e.g., using rApp/xApp) to handle stale RAN Resources: According to a first example embodiment of the system and method according to the present disclosure, an RIC-based technique is utilized to detect and clean up stale RAN resources. Described below are several sub-variants of Method 1.

Method 1A - Polling-based method: In a first sub-variant (Method 1A), a polling-based method is implemented to detect and clean up the resources. Although the example Method 1A is explained for UE context resources, the example Method 1A is equally applicable to other RAN resources such as PDU session, DRB, etc. Various Steps of Method 1A are explained below.

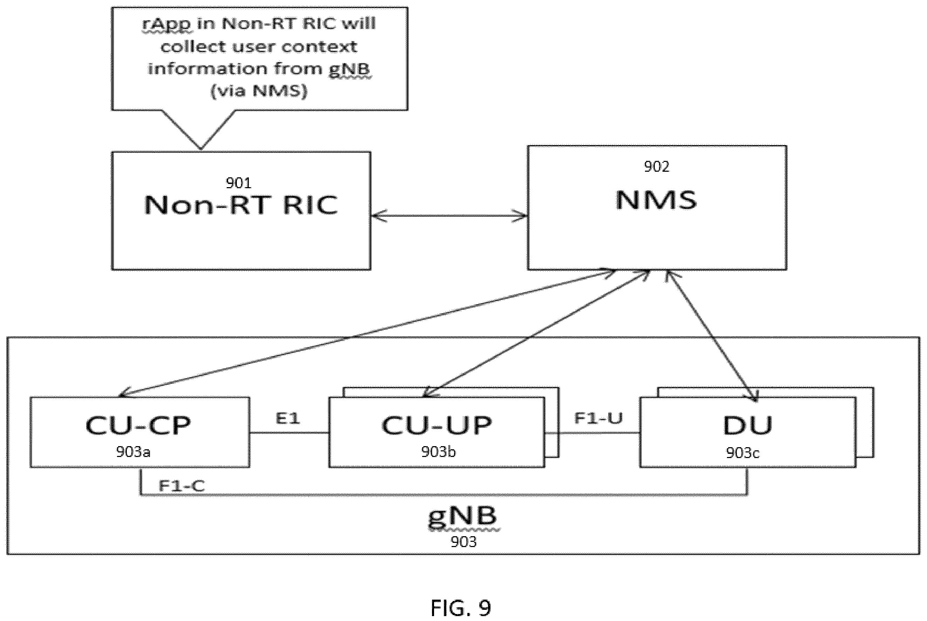

Step 1 (Data Collection): Non-RT RIC (e.g., 901 as shown in FIG. 9) can periodically poll the RAN nodes (e.g., CU-CP 903a, CU-UP 903b and DU 903c of gNB 903 shown in FIG. 9) via a management interface (e.g., as implemented by network management system (NMS) 902) to get the information about the allocated UE contexts. In response to the allocated UE context request, along with other information, RAN nodes can include the application protocol identity (AP ID) for respective interfaces between the respective RAN nodes. AP ID is allocated when a new UE-associated logical connection is created in RAN node and it uniquely identifies a logical connection associated with a UE over the specific interface within a node. AP ID acts as a unique identifier for the logical UE connection between the respective nodes and thus can be used as a key to identify the users in different nodes.

Additionally, Non-RT RIC can periodically poll the CU-CP and DU via the management interface (e.g., NMS 902) to get the information about the allocated UE contexts using the Cell Global identifier (CGI) and Cell Radio-Network Temporary Identifier (CRNTI) tuple. The CGI uniquely identifies the cell in the PLMN, and the CRNTI locally identifies the UE in the cell. The (CGI, CRNTI) tuple acts as a unique identifier for the UE context maintained at the CU-CP and DU, respectively.

Data collection can be optimized further by reporting UE contexts whose age is greater than a configurable threshold. When the Non-RT RIC polls for the UE context information, it can specify the minimum age of the UE context to be reported, e.g., the Non-RT RIC can specify only UE context aged more than 5 minutes to be reported. This helps in reducing both bandwidth (BW) and processing cost.

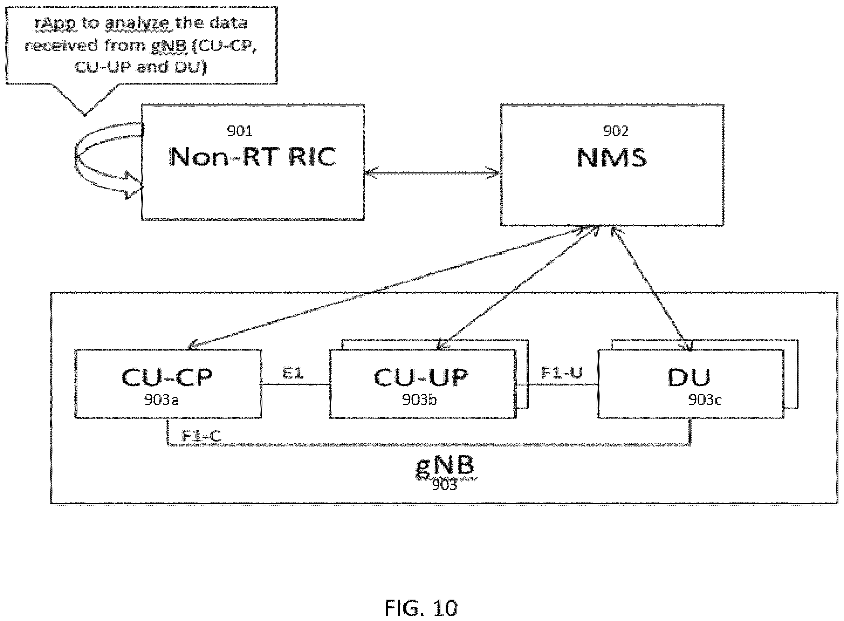

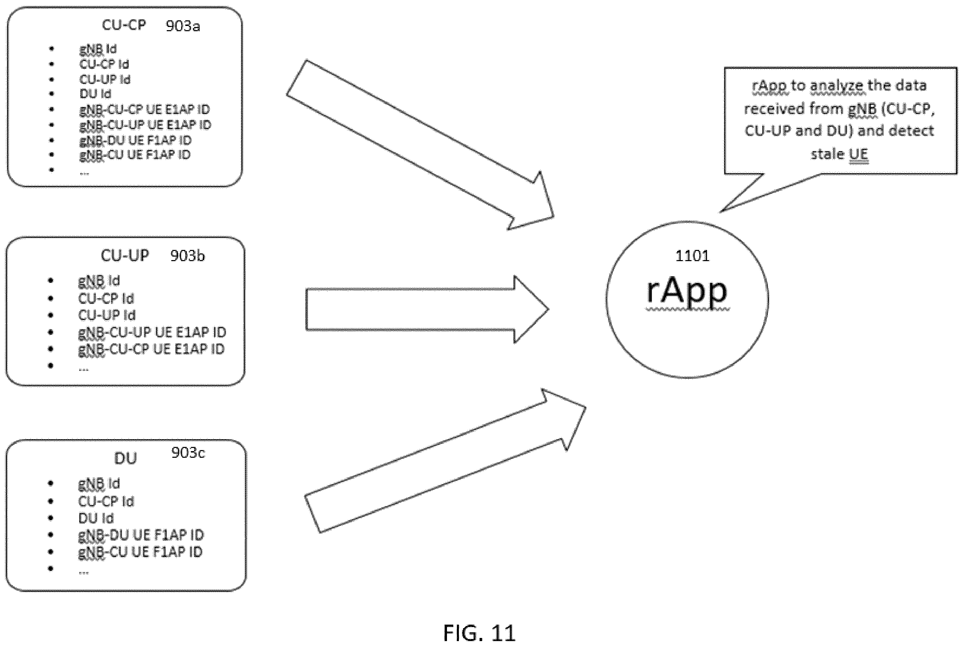

Step 2 Data Analysis): Using the AP ID as well as other information (e.g., as discussed above) received for different interfaces from CU-CP, CU-UP and DU, the Non-RT RIC can correlate the received information to determine whether all nodes are in sync or not. FIG. 10 and FIG. 11 illustrate the data analysis (e.g., by an rApp associated with the Non-RT RIC 901, such as rApp 1101 in FIG. 11) based on the received data. For example, the following set of information can be correlated (shown below in Table 1):

**TABLE 1**

| | | |
|---|---|---|
| gNB-CU UE F1AP ID | Identifier of the UE association over the F1 interface within the gNB-CU-CP | It can be used to identify the UE between CU-CP and DU |
| gNB-DU UE F1AP ID | Identifier of the UE association over the F1 interface within the gNB-DU | It can be used to identify the UE between CU-CP and DU |
| gNB-CU-UP UE E1AP ID | Identifier of the UE association over the E1 interface within the gNB-CU-UP | It can be used to identify the UE between CU-CP and CU-UP |
| gNB-CU-CP UE E1AP ID | Identifier of the UE association over the E1 interface within the gNB-CU-CP | It can be used to identify the UE between CU-CP and CU-UP |

As shown in Table 1 and FIG. 11, CU-CP can report gNB-CU UE F1AP ID, gNB-DU UE F1AP ID, gNB-CU-CP UE E1AP ID, and gNB-CU-UP UE E1AP ID for every allocated UE context. Similarly, CU-UP can report gNB-CU-CP UE E1AP ID and gNB-CU-UP UE E1AP ID, and DU can report gNB-CU UE F1AP ID and gNB-DU UE F1AP ID for every allocated UE context. In addition, CU-CP 903a can report gNB ID, CU-CP ID, CU-UP ID and DU ID; CU-UP 903b can report gNB ID, CU-CP ID, and CU-UP ID; and DU 903c can report gNB ID, CU-CP ID, and DU ID.

To identify a UE uniquely in CU-CP and CU-UP, gNB-CU-CP UE E1AP ID and gNB-CU-UP UE E1AP ID shall be matched across CU-CP and CU-UP. Similarly, gNB-CU UE F1AP ID and gNB-DU UE F1AP ID shall be matched to identify UE across CU-CP and DU. This 3-way comparison across CU-CP, one or more CU-Ups, and DUs in a gNB can be used to detect whether any stale UE context is present in the system. Table 2 below illustrates examples of how stale UE contexts can be detected in a gNB based on APID:

**TABLE 2**

| User | CU-CP | CU-UP | DU | Stale UE |
|---|---|---|---|---|
| 1 | gNBId = 100 | gNB-CU-CP UE E1AP ID = 3 | gNBId = 100 | No |
| | gNB-CU UE F1AP ID = 1 | | gNB-CU UE F1AP ID = 1 | |
| | gNB-DU UE F1AP ID = 2 | gNB-CU-UP UE E1AP ID = 4 | | |
| | gNB-CU-CP UE E1AP ID = 3 | | gNB-DU UE F1AP ID = 2 | |
| | gNB-CU-UP UE E1AP ID = 4 | | | |
| 2 | gNBId = 100 | No match found | No match found | Yes, Stale UE at CU-CP |
| | gNB-CU UE F1AP ID = 5 | | | |
| | gNB-DU UE F1AP ID = 6 | | | |
| | gNB-CU-CP UE E1AP ID = 7 | | | |
| | gNB-CU-UP UE E1AP ID = 8 | | | |
| 3 | No match found | gNBId = 100 | No match found | Yes, stale UE at CU-UP |
| | | gNB-CU-CP UE E1AP ID = 11 | | |
| | | gNB-CU-UP UE E1AP ID = 12 | | |
| 4 | No match found | No match found | gNBId = 100 | Yes, stale UE at DU |
| | | | gNB-CU UE F1AP ID = 9 | |
| | | | gNB-DU UE F1AP ID = 10 | |
| 5 | gNBId = 100 | gNBId = 100 | No match found | Yes, stale UE at CU-CP and CU-UP |
| | gNB-CU UE F1AP ID = 13 | gNB-CU-CP UE E1AP ID = 15 | | |
| | gNB-DU UE F1AP ID = 14 | gNB-CU-UP UE E1AP ID = 16 | | |
| | gNB-CU-CP UE E1AP ID = 15 | | | |
| | gNB-CU-UP UE E1AP ID = 16 | | | |

In an example embodiment, to identify a UE uniquely in CU-CP and DU, the (CGI, CRNTI) tuple shall be matched across CU-CP and DU. This 2-way comparison across CU-CP and one or more DUs in a gNB can be used to detect whether any stale UE context is present in the respective node. An example of using such comparison is shown in Table 3 below:

**TABLE 3**

| User | CU-CP | DU | Stale UE |
|---|---|---|---|
| 1 | {CGI = 1000, CRNTI = 10} | {CGI = 1000, CRNTI = 10} | No |
| 2 | {CGI = 2000, CRNTI = 20} | No match found | Yes, Stale UE at CU-CP |
| 3 | No match found | {CGI = 3000, CRNTI = 30} | Yes, stale UE at DU |

An example of detecting stale UEs in the scenario of inter-DU conditional handover (CHO) is shown in Table 4 below:

**TABLE 4**

| User | CU-CP | CU-UP | DU 1 | DU 2 | Stale UE |
|---|---|---|---|---|---|
| 1 | gNB-CU UE F1AP ID = 1 | gNB-CU-CP UE E1AP ID = 23 | gNB-CU UE F1AP ID = 1 | gNB-CU UE F1AP ID = 1 | No |
| | DU 1 : gNB-DU UE F1AP ID = 2 | gNB-CU-UP UE E1AP ID = 24 | gNB-DU UE F1AP ID=2 | gNB-DU UE F1AP ID = 3 | |
| | DU 2 : gNB-DU UE F1AP ID = 3 | | | | |
| | gNB-CU-CP UE E1AP ID = 23 | | | | |
| | gNB-CU-UP UE E1AP ID = 24 | | | | |
| 2 | gNB-CU UE F1AP ID = 1 | gNB-CU-CP UE E1AP ID = 23 | gNB-CU UE F1AP ID = 1 | No data | Yes, Stale UE resource in CU-CP for DU 2 |
| | DU 1: gNB-DU UE F1AP ID = 2 | gNB-CU-UP UE E1AP ID = 24 | gNB-DU UE F1AP ID=2 | | |
| | DU 2 : gNB-DU UE F1AP ID = 3 | | | | |
| | gNB-CU-CP UE E1AP ID = 23 | | | | |
| | gNB-CU-UP UE E1AP ID = 24 | | | | |
| 3 | gNB-CU UE F1AP ID = 1 | gNB-CU-CP UE E1AP ID = 23 | gNB-CU UE F1AP ID = 1 | gNB-CU UE F1AP ID = 1 | Yes, stale UE context in DU 1 |
| | DU 1 : No data available | gNB-CU-UP UE E1AP ID = 24 | gNB-DU UE F1AP ID=2 | gNB-DU UE F1AP ID = 3 | |
| | DU 2 : gNB-DU UE F1AP ID = 3 | | | | |
| | gNB-CU-CP UE E1AP ID = 23 | | | | |
| | gNB-CU-UP UE E1AP ID = 24 | | | | |

In an alternative example, we can also determine stale UE contexts across gNBs connected via Xn interface in the scenario of CHO.

For a UE which has transitioned to RRC Inactive state, the UE is allocated IRNTI, and the CRNTI is released. The UE context is maintained in CU-CP and CU-UP, while the UE context in DU is cleared when the UE has transitioned to RRC Inactive. When the 3-way comparison (e.g., as described above) based on AP ID is applied to identify stale UEs, the UE contexts for UEs which have transitioned to RRC Inactive state are not found in DU, but this does not necessarily mean there are stale UEs in the CU-CP. If the UE context available in CU-CP is associated with IRNTI but not with CRNTI, then it is not a stale UE. If the UE context available in CU-CP is associated with CRNTI and UE context in DU is not found, then it is a stale UE in CU-CP. Alternatively, if the UE context based on AP ID is found in CU-CP and CU-UP but not found in DU, then it can be deduced that the UE is an RRC-Inactive UE. If i) the Non-RT RIC determines the UE is RRC-Inactive, and ii) UE context is found in CU-CP but not in CU-UP, then there is a stale UE in CU-CP. If i) the Non-RT RIC determines the UE is RRC-Inactive, and ii) UE context is found in CU-UP but not in CU-CP, then there is stale UE in CU-UP.

Step 3 (Clean-up action): After stale UE contexts are identified in Step 2, Non-RT RIC can send a trigger to respective Network function(s) to perform the necessary clean-up. The clean-up command should include gNB ID, NF ID and a list of AP IDs for the node (e.g., CU-UP or CU-CP) to identify and delete the stale user context(s). For example, if a stale context is detected in CU-UP, a clean-up command will be sent CU-UP. Similarly, if a stale context is found in CU-CP, a clean-up trigger will be sent to CU-CP. Further optimizations, such as evaluating the status of a stale UE for multiple intervals before initiating the clean-up, are also possible to avoid any false detection, and such optimizations can be implemented in the rApp. it should be noted that Step 2 and Step 3 can be designed differently for detection of stale context of users in RRC-connected mode and RRC-inactive mode.

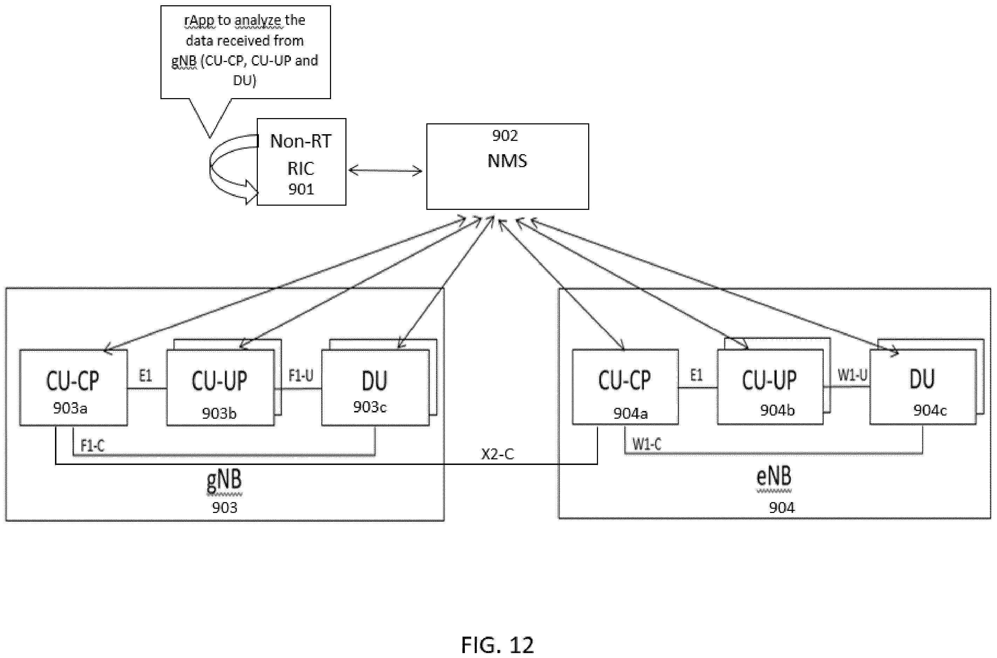

The above-described Method 1A can also be applied to the following scenario: Non-Standalone (NSA) deployments to find the stale UE contexts across eNB and gNB. When stale UEs are detected across eNB and gNB, clean-up action mentioned above can be triggered on the impacted node to remove the stale UE contexts. FIG. 12 illustrates the overall system connection involving Non-RT RIC 901, NMS 902, gNB 903 (which comprises CU-CP 903a, CU-UP 903b, and DU 903c), and eNB 904 (which comprises CU-CP 904a, CU-UP 904b, and DU 904c) connected to gNB 903 via an X2-C interface. Table 5 shown below illustrates different examples of how stale UE contexts can be detected across eNB and gNB.

**TABLE5**

| User | eNB CU-CP | gNB CU-CP | Stale UE |
|---|---|---|---|
| 1 | MeNB-UE-X2AP-10=5 | MeNB-UE-X2AP-10=5 | No |
| | SgNB-UE-X2AP-ID=6 | SgNB-UE-X2AP-ID=6 | |
| | eNB Id = 100 | eNB Id = 100 | |
| | gNB Id = 200 | gNB Id = 200 | |
| 2 | No match found | MeNB-UE-X2AP-10=5 | Yes, Stale UE at gNB. |
| | | SgNB-UE-X2AP-ID=6 | |
| | | eNB Id = 100 | |
| | | gNB Id = 200 | |
| 3 | MeNB-UE-X2AP-10=5 | No match found | Yes, Stale SCG bearer at eNB. SCG resources can be released on eNB |
| | SgNB-UE-X2AP-ID=6 | | |
| | eNB Id = 100 | | |
| | gNBId = 200 | | |

Although Method 1A has been explained for UE context resource, this method can also be used to audit the resource allocation at different levels, e.g., PDU session, DRB, QoS Flow, etc., in the RAN nodes. In addition, although Method 1A has been described as using polling, asynchronous reporting of UE context information to Non-RT RIC at pre-configured interval can also be supported.

Method 1B (Telemetry Data - tracing data): In modern day telecom deployments, telemetry data play an essential role in monitoring the health and performance of the network. RIC-based rApps and xApps rely heavily on the telemetry data from RAN nodes. Performance counters, trace events, and logging are some of the important data requirements of rApps and xApps, and these are being monitored continuously by RIC applications to optimize the network. In the context of stale UE detection, tracing data sent from RAN nodes can be leveraged to detect whether any of the RAN nodes has stale UE context(s). Using trace information not only helps in easily detecting the stale UE contexts, but it will also provide enrichment data in terms of the call flow sequence that potentially caused the stale context in the system. This enrichment data can be further analyzed using artificial intelligence (AI) and/or machine learning (ML) to identify some pattern and automatically detect the source of the issue. Whether the issue is i) caused in a specific scenario, ii) caused in a specific UE model, or iii) due to a specific sequence of events can be easily determined. By employing such techniques, identifying the cause of the problem is greatly simplified in a sub-variant (referred to a Method 1B) of the first example method.

Step 1 Data Collection): RAN nodes report tracing data to the RIC (e.g., Near-RT RIC). Apart from standard 3GPP trace events, internal events such as UE context allocation and UE context release can be traced by RAN nodes.

Step 2 (Data Analysis): 3GPP trace events and internal trace events from CU-CP, CU-UP and DU nodes can be monitored by the RIC (e.g., Near-RT RIC) to determine whether all nodes in the gNB have cleaned up the UE context or not (i.e., UE context still exists). If any of the nodes did not clean up the UE context, RIC can further monitor the signalling and/or user plane activity of the user. If no activity is observed for a predefined time, such UEs can be marked (categorized) as stale UE context. RIC can further retrieve the UE context information for stale UE context as described in Step 1 and Step 2 of Method 1A to ensure that it is really the case of a stale UE, in which case a clean-up is subsequently triggered.

Step 3 (Clean-up Action): The clean-up action is the same as that described for Method 1A.

Method 1C (Telemetry Data - PM Counters): In this subvariant (Method 1C) of the first example method, the trigger for detecting a stale UE context can be performance measurement (PM) counters. The RIC (e.g., Non-RT RIC) can detect a stale UE based on performance counters it receives from RAN (i.e., E2) nodes. The number of UEs (connected) at CU-CP should be equal to the number of UEs across all DUs served by CU-CP. Similarly, the number of UEs (connected or inactive) at CU-CP should be equal to the number of UEs across all CU-UPs served by CU-CP. This information can be further analyzed at the cell level to obtain the precise information about stale UE context. If any discrepancy is found between the number of connected UEs reported by different nodes and the discrepancy continues to be present for multiple PM counter collection intervals, it can be treated as a stale UE condition. Once a stale UE condition is detected, Method 1A or Method 1B can be used for data collection, analysis and stale UE clean up.

Typically, PM counters are implemented at the cell level identified by CGI. However, PM counter at the cell level may be implemented at CU-CP or DU, depending on the pegging condition associated with the functionality and usage of the counter. To detect the stale UE problem, a counter for the number of RRC-connected users can be pegged at the cell level in both DU and CU, respectively. Whenever the UE context is created in CU-CP and DU, respectively, the counter is incremented, and when the UE context is cleared at the respective node, the counter shall be decremented. At a given point of time, if the number of RRC-connected users at the cell level in CU-CP is equal to the number of RRC-connected users at the cell level in DU, there is no stale UE. However, if there is a mismatch in the number of RRC-connected users at the cell level, then there is a stale UE in either CU-CP or DU. An example is shown in Table 6 below:

**TABLE 6**

| Case | Cell level counter at CU-CP | Cell level counter at DU | Stale UE |
|---|---|---|---|
| 1 | {CGI = 1000, RRCConnUEs = 10} | {CGI = 1000, RRCConnUEs = 10} | No |
| 2 | {CGI = 2000, RRCCoontUEs = 20} | {CGI = 2000, RRCCoontUEs = 15} | Yes, 5 Stale UEs at CU-CP |
| 3 | {CGI = 3000, RRCCoontUEs = 20} | {CGI = 3000, RRCCoontUEs = 30} | Yes, 10 stale UEs at DU |

Method 1D (Near-RT RIC stale UE detection): In another sub-variant of Method 1 (referred to as Method 1D), in addition to standard 3GPP events, internal events such as UE context allocation and UE context release from different E2 nodes (CU-CP, CU-UP and/or DU) can be monitored by Near-RT RIC, which can determine stale context in real time. Near-RT RIC and E2 nodes can utilize report services, either with report style 1 or 2. With report style 1, Near-RT RIC can request E2 node to report specific events such as Initial UL RRC Message, Incoming Xn/NG HO Request, UE Context Release Request, and Bearer Context Release Request, etc. Similarly, for report style 2, UE Context Management and Bearer Context Management call process types can be configured. Based on the information received from E2 nodes, corrective action can be triggered immediately or additional steps described in Method 1A or 1B can be taken to clear the stale UE contexts.

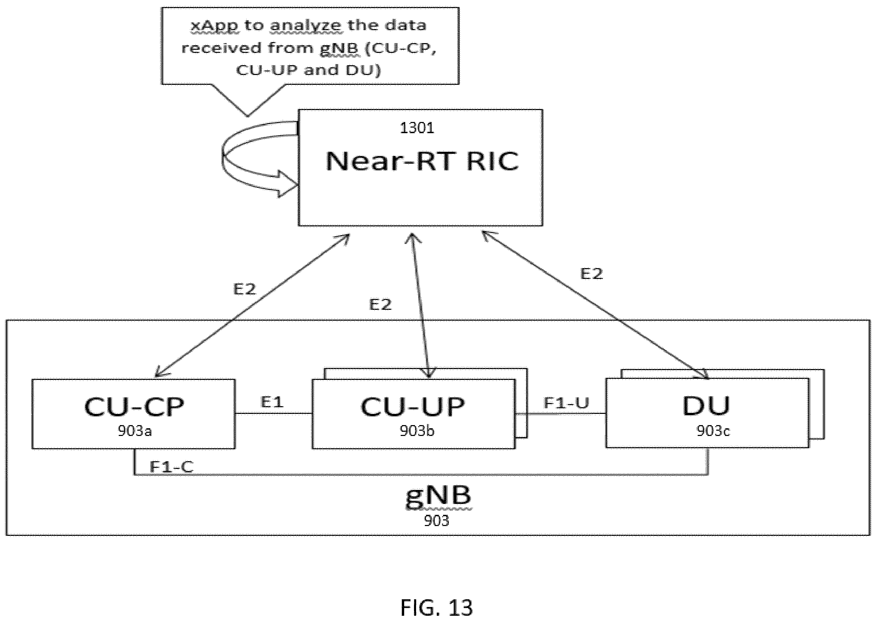

In the context of Method 1D, FIG. 13 shows the connectivity among CU-CP 903a, CU-UP 903b, DU 903c and Near-RT RIC 1301. CU-CP 903a, CU-UP 903b, and DU 903c are each connected to the Near-RT RIC 1301 via an E2 interface. xApp associated with the Near-RT RIC analyzes the data received from the gNB 903 E2 nodes (CU-CP 903a, CU-UP 903b, and DU 903c) to trigger a corrective action or take additional steps described in Method 1A or 1B. CU-CP 903a and CU-UP 903b are connected by an E1 interface; CU-CP 903a and DU 903c are connected by an F1-C interface; and CU-UP 903b and DU 903c are connected by an F1-U interface.

Method 2 (gNB-level native stale resource detection and clean-up): In a second example method (Method 2), a procedure to detect and clean up stale resources based on Resource Status Reporting is explained for UE Context resource. It should be noted that Method 2 can be applied to other RAN resources such as PDU session, DRB, etc.

As shown in FIG. 5 and as previously explained in connection therewith, 3GPP supports a disaggregated architecture in which the gNB functionality is distributed across gNB-CU-CP, gNB-CU-UP and gNB-DU. E1 is the interface between gNB-CU-CP (CU-Control Plane) and gNB-CU-UP (CU-User Plane), F1-C is the interface between gNB-CU-CP and gNB-DU, and F1-U is the interface between gNB-CU-UP and gNB-DU. A gNB may consist of a gNB-CU-CP, multiple gNB-CU-UPs and multiple gNB-DUs. One gNB-DU is connected to only one gNB-CU-CP and one gNB-CU-UP is connected to only one gNB-CU-CP. When a UE is admitted into a gNB, a UE context is created in gNB-CU-CP, gNB-CU-UP and DU. 3GPP has defined signaling procedures over F1-C and E1 interfaces to manage creation, modification and deletion of UE context. Even though both F1-C and E1 interfaces are supported over reliable SCTP interface, it is still possible that messages are not processed due to software issues or due to some software bug which causes stale UEs in the system. To provide e a native capability in gNB to be able to detect stale UE context and perform the necessary clean-up, both F1-C and E1 interfaces are proposed to be updated as described below.

Resource Status Reporting procedure is an existing procedure used on F1-C and E1 interface to report the load measurements to gNB-CU-CP. As part of this procedure, both DU and CU-UP can report the load status of the user and bearer contexts to CU-CP. Additional IEs described below in sections discussing F1-C and E1AP can be added to existing messages to share the required information across different nodes of gNB. CU-CP can request status report for user and/or bearer session contexts periodically from CU-UP and DU. An audit can be performed based on some configured thresholds, e.g., when the number of connected UEs in a given cell is greater than 75% of maximum number of connected UEs supported by the cell or CU-CP, which threshold can be implementation dependent. Using UE context related information reported in Resource Status Reporting procedure from other nodes (CU-UP and DU), CU-CP can ensure that all nodes are in sync. In case some stale contexts are found, clean-up will be performed.

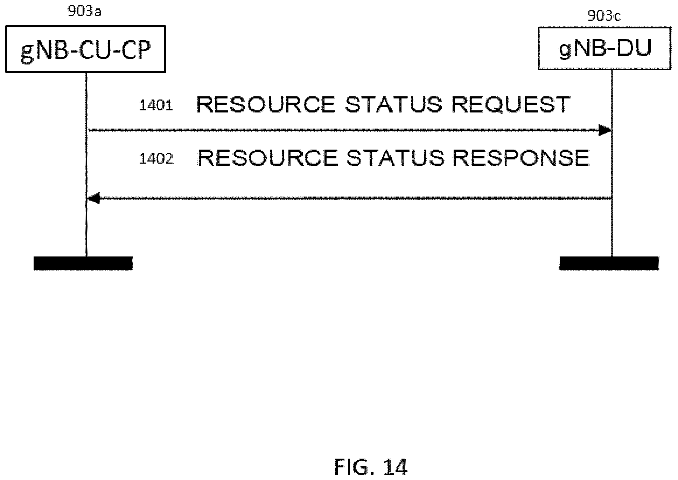

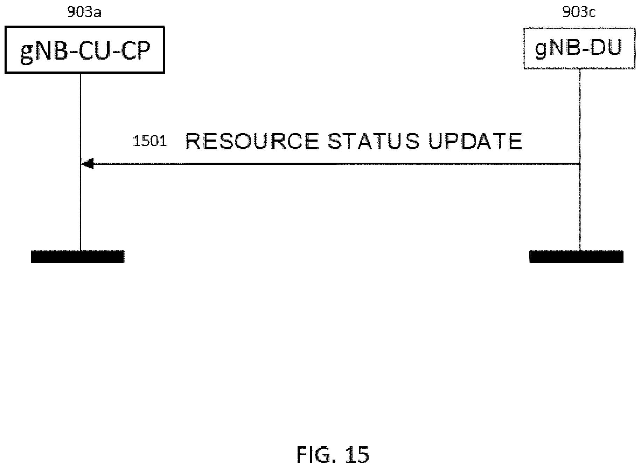

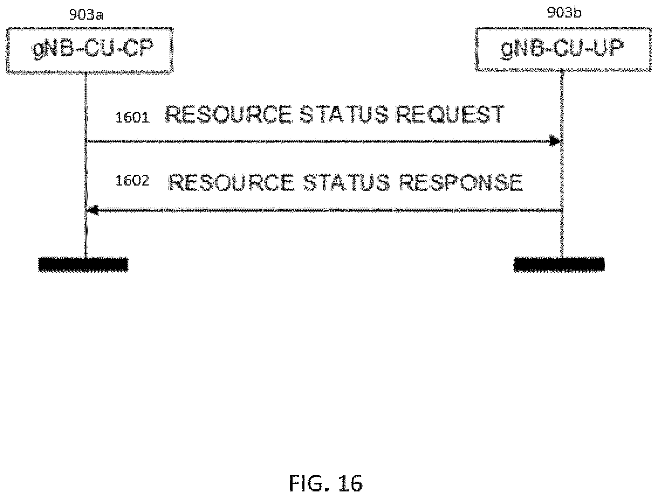

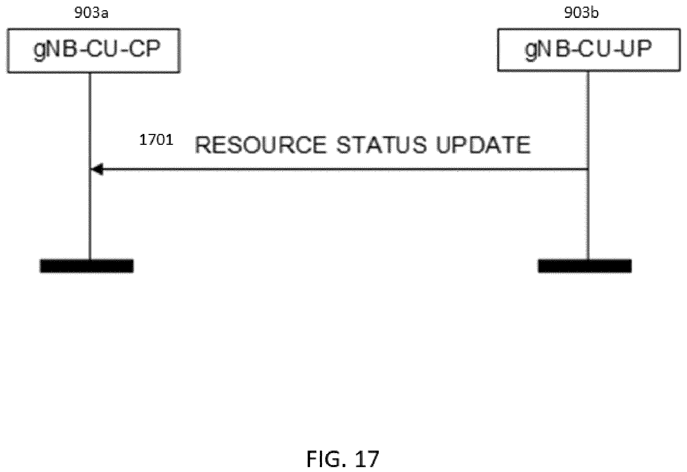

The following sequence of steps illustrate an example for implementing an audit:
a1) CU-CP 903a configures DU 903c to periodically report connected UE information by configuration of "Number of Connected UEs" measurement object (bit 7 in the "Report Characteristics" IE, which corresponds to the "Number of Connected UEs" measurement object, is new according to the present disclosure) using RESOURCE STATUS REQUEST message 1401 (which is shown in FIG. 14). Reporting periodicity can also be configured as part of this message. In an alternative embodiment, CU-CP can configure DU to report based on a threshold event, e.g., the number of users in a given cell is greater than the configured threshold percentage of the maximum number of users supported by the cell.
a2) Similarly, CU-CP 903a can configure (e.g., by sending RESOURCE STATUS REQUEST message to CU-UP 903b, which is shown in FIG. 16) "Number of Bearer Contexts" measurement object (bit 3 in the "Report Characteristics" IE, which corresponds to the "Number of Bearer Contexts" measurement object, is new according to the present disclosure) in CU-UP to report the bearer context information.
b) Upon receiving the RESOURCE STATUS REQUEST message (i.e., 1401 to DU 903c, or 1601 to CU-UP 903b), DU and/or CU-UP will check its capability to report the required information. If capable, DU and/or CU-UP will initiate the measurement for the required object and send RESOURCE STATUS RESPONSE to CU-CP (as shown by 1402 in FIG. 14 for a response from DU, and as shown by 1602 in FIG. 16 for a response from CU-UP).
c) CU-UP 903b and DU 903c will each report a RESOURCE STATUS UPDATE to CU-CP 903a, (as shown by 1501 in FIG. 15 for an update from DU 903c, and as shown by 1701 in FIG. 17 for an update from CU-UP 903b) which will include the number of bearer contexts (update from CU-UP) and the number of connected UE count per cell level (updated from DU). DU can send the Resource Status Update based on an event, e.g., the number of connected users is greater than the configured threshold percentage of maximum number of users supported by the cell. CU-UP can send the Resource Status Update based on an event, e.g., the number of DRBs is greater than the configured threshold percentage of maximum number of DRBs supported by the CU-UP.
d) CU-CP will compare the received values with information stored locally in CU-CP. If the number of connected users (UEs) reported by DU and/or the number of bearer context reported by CU-UP and the respective associated values stored locally in CU-CP differ by a specified threshold, CU-CP can configure "Connected UE Report Periodic" measurement object (bit 8 in the "Report Characteristics" IE, which corresponds to the "Connected UE Report Periodic" measurement object, is new according to the present disclosure) and/or "Bearer Context Report Periodic" measurement object (bit 4 in the "Report Characteristics" IE, which corresponds to the "Bearer Context Report Periodic" measurement object, is new according to the present disclosure) in RESOURCE STATUS REQUEST message for CU-UP and/or DU.
   i) When "Connected UE Report Periodic" and "Bearer Context Report Periodic" measurement objects are configured, information about every UE and/or Bearer context will be reported to CU-CP. For example, DU will report gNB-DU UE F1AP ID, gNB-CU UE F1AP ID, C-RNTI, along with other optional IEs, for every session; and CU-UP will report gNB-CU-UP UE E1AP ID and gNB-CU-CP UE E1AP ID, along with other optional IEs, for every session.
   ii) It is possible to configure the measurement objects only for the cells of interest in DU to reduce the messaging overhead on the midhaul (MH).
e) CU-CP can use the above information to perform the audit against the UE context stored locally in CU-CP.
f) Once the audit is completed and the necessary clean-up is done, CU-CP can de-configure Bearer Context Report Periodic and Connected UE Report Periodic measurement objects on CU-UP and DU, respectively.

Although the above example has been described for auditing UE contexts, similar audits can be performed when a discrepancy is detected at the DRB or the PDU session level, by configuring RESOURCE STATUS REQUEST with appropriate measurement objects. Various example scenarios will be discussed below.

Example 1: In case a bearer context is allocated in CU-UP but a corresponding user context is not found in CU-CP and DU, then CU-CP can send E1 Reset (partial) message containing one or more gNB-CU-CP UE E1AP ID IE and gNB-CU-UP UE E1AP ID IE to explicitly identify the UE association(s) to be reset.

Example 2: In case a user context is allocated in DU but a user context is not found in CU-CP and CU-UP, then CU-CP can send F1 Reset (partial) message containing one or more gNB-DU UE F1AP ID and gNB-CU UE F1AP ID IE to explicitly identify the UE association(s) to be reset.

Example 3: If a user context is found in CU-CP but DU and CU-UP don't have the corresponding user context, then CU-CP can locally perform a UE context release.

Example 4: In case a PDU-level mismatch is detected on E1 interface, CU-CP can configure the RESOURCE STATUS REQUEST and perform the clean-up of the stale PDU session by including "PDU Session Resource To Remove List" in a BEARER CONTEXT MODIFICATION REQUEST message. Similarly, DRBs corresponding to the stale PDU on the DU can be cleared by including "DRB to Be Released List" in a UE CONTEXT MODIFICATION REQUEST message towards DU, if required.

Example 5 for non-standalone (NSA) mode deployment: In case a DRB-level mismatch is detected on F1-C interface, CU-CP can configure the REPORT STATUS REQUEST and perform the clean-up of the stale DRB by including "DRB to Be Released List" in a UE CONTEXT MODIFICATION REQUEST message sent towards DU. Similarly, "DRB To Remove List" can be included in a BEARER CONTEXT MODIFICATION REQUEST message sent to CU-UP to release the corresponding DRB on CU-UP, if required.

Example 6 for standalone (SA) mode deployment: Similar to above example 4, to clean up a DRB-level mismatch, CU-CP can include "DRB To Remove List" in a "PDU Session Resource To Modify List" IE of a BEARER CONTEXT MODIFICATION REQUEST message sent towards CU-UP. The clean-up procedure for DU-level DRB mismatch will remain the same as in example 5.

The above-described technique for stale-resource detection and clean-up can be applied to 4G legacy RAN and other combinations of MR-DC deployments.

In addition, resource status reporting procedure can also be enhanced such that CU-UP and DU can also request for the user session status report to perform the audit.

In this section, details of RESOURCE STATUS REQUEST sent to gNB-DU will be discussed, including new elements proposed to be added according to the present disclosure. As discussed above, RESOURCE STATUS REQUEST message is sent by gNB-CU (e.g., gNB-CU-CP) to gNB-DU to initiate the requested measurement according to the parameters given in the message. The overall structure of RESOURCE STATUS REQUEST message is shown in Table 7 below. In the "Report Characteristics" IE, a seventh bit is added to enable report of connected UE periodic report (among other changes). Changes proposed to the RESOURCE STATUS REQUEST message sent by gNB-CU-CP are highlighted in bold and underlined below:

**TABLE 7**

| IE/Group Name | | | | | | Presence | Range | IE type and reference | Semantics description | Criticality | Assigned Criticality |
|---|---|---|---|---|---|---|---|---|---|---|---|
| Message Type | | | | | | M | | 9.3.1.1 | | YES | reject |
| Transaction ID | | | | | | M | | 9.3.1.23 | | YES | reject |
| gNB-CU Measurement ID | | | | | | M | | INTEGER (1..4095,...) | Allocated by gNB-CU | YES | reject |
| gNB-DU Measurement ID | | | | | | C-ifRegistrati onReques tStoporAd d | | INTEGER (1..4095,...) | Allocated by gNB-DU | YES | ignore |
| Registration Request | | | | | | M | | ENUMERATED (start, stop, add, ...) | Type of request for which the resource status is required. | YES | ignore |
| Report Characteristics | | | | | | C-ifRegistrati onReques tStart | | BIT STRING (SIZE(32)) | Each position in the bitmap indicates measurement object the gNB-DU is requested to report. | YES | ignore |
| | | | | | | | | | First Bit = PRB Periodic, Second Bit = TNL Capacity Ind Periodic, Third Bit = Composite Available Capacity Periodic, Fourth Bit = HW Loadlnd Periodic, Fifth Bit = Number of Active UEs Periodic, Sixth Bit = NR-U Channel List Periodic. | | |
| | | | | | | | | | **Seventh Bit** = **Number of Connected UEs** | | |
| | | | | | | | | | **Eighth Bit** = **Connected UE Report Periodic** | | |
| | | | | | | | | | **Ninth Bit** = **Number of DRBs** | | |
| | | | | | | | | | Other bits shall be ignored by the gNB-DU. | | |
| Cell To Report List | | | | | | | *0..1* | | Cell ID list to which the request applies. | YES | ignore |
| | >Cell To Report Item | | | | | | *1* .. *<maxCelli naNBDU>* | | | | |
| | | >>Cell ID | | | | M | | NR CGI 9.3.1.12 | | - | |
| | | >>SSB To Report List | | | | | *0..1* | | SSB list to which the request applies. | - | |
| | | | >>>SSB To Report Item | | | | *1* .. < *maxnoofS SBAreas>* | | | - | |
| | | | | >>>>SSB index | | M | | INTEGER (063) | | - | |
| | | >>Slice To Report List | | | | | *0..1* | | S-NSSAI list to which the request applies. | - | |
| | | | >>>Slice To Report Item | | | | *1..*< *maxnoof8 PLMNsNR* > | | | - | |
| | | | | >>>>PLMN Identity | | M | | 9.3.1.14 | Broadcast PLMN | | |
| | | | | >>>>S-NSSAI List | | | *1* | | | - | |
| | | | | | >>>>>S-NSSAI Item | | *1* .. < *maxnoofSI iceltems>* | | | - | |
| | | | | | >>>>>>S-NSSAI | M | | 9.3.1.38 | | - | |
| | | **>> Connection Time** | | | | **O** | | **INTEGER (1..7200 in secs) or (1..120 in mins)** | **Select connected UEs whose age is greater than or equal to specified connection time. This is configured only when Connected UE Report Periodic measurement object is configured** | | |
| Reporting Periodicity | | | | | | O | | ENUMERATED (500ms, 1000ms, 2000ms, 5000ms, 10000 ms, ...) | Periodicity that can be used for reporting of indicated measurements. Also used as the averaging window length for all measurement object if supported. | YES | ignore |

| IE/Group Name | | Presence | | Range | | IE type and reference | | Semantics description | Criticality | | Assigned Criticality |
|---|---|---|---|---|---|---|---|---|---|---|---|
| | | | | | | | | This IE is ignored if the *Registration Request* IE is set to "add". | | | |

RESOURCE STATUS UPDATE message is sent by gNB-DU to gNB-CU (e.g., gNB-CU-CP) to report the results of the requested measurement. The overall structure of the RESOURCE STATUS UPDATE message sent by gNB-DU is shown in Table 8 below. Changes proposed to the RESOURCE STATUS UPDATE message are highlighted in **bold** and underlined below, which changes include adding, e.g., "Number of Connected UE" IE and "Number of DRB" IE, among others.

**TABLE8**

| IE/Group Name | | | | | Presence | Range | IE type and reference | Semantics description | Criticality | Assigned Criticality |
|---|---|---|---|---|---|---|---|---|---|---|
| Message Type | | | | | M | | 9.3.1.1 | | YES | ignore |
| Transaction ID | | | | | M | | 9.3.1.23 | | YES | reject |
| gNB-CU Measurement ID | | | | | M | | INTEGER (1..4095,...) | Allocated by gNB-CU | YES | reject |
| gNB-DU Measurement ID | | | | | M | | INTEGER (1..4095,...) | Allocated by gNB-DU | YES | ignore |
| Hardware Load Indicator | | | | | O | | 9.3.1.136 | | YES | ignore |
| TNL Capacity Indicator | | | | | O | | 9.3.1.128 | | YES | ignore |
| Cell Measurement Result | | | | | | *0..1* | | | YES | ignore |
| | >Cell Measurement Result Item | | | | | *1* .. *<maxCelli ngNBDU* > | | | - | |
| | | >>Cell ID | | | M | | NR CGI 9.3.1.12 | | - | |
| | | >>Radio Resource Status | | | O | | 9.3.1.129 | | - | |
| | | >>Composite Available Capacity Group | | | O | | 9.3.1.130 | | - | |
| | | >>Slice Available Capacity | | | O | | 9.3.1.134 | | - | |
| | | >>Number of Active UEs | | | O | | 9.3.1.135 | | - | |
| | | >>NR-U Channel List | | | | *0..1* | | | YES | ignore |
| | | | >>>NR-U Channel Item | | | *1..<maxn oofNR-UChannel IDs>* | | | - | |
| | | | | >>>>NR-U Channel ID | M | | INTEGER (1.. *maxnoofNR-* | Identifies a portion of the NR-U | - | |

| IE/Group Name | | | | Presence | Range | IE type and reference | Semantics description | Criticality | Assigned Criticality | |
|---|---|---|---|---|---|---|---|---|---|---|
| | | | | | | *UChannelIDs,* ...) | Channel Bandwidth on which channel access procedure in shared spectrum has been performed in the last reporting period. | | | |
| | | | >>>>Channel occupancy time percentage DL | M | | INTEGER (0..100) | The percentage of time for which the channel resources have been utilized for DL traffic served by the corresponding NR-U Channel of the serving cell. Value 100 indicates that the channel resources have been utilized for DL traffic served by the corresponding NR-U Channel of the serving cell for the whole duration between consecutive reporting. | - | | |
| | | | >>>>Energy Detection Threshold DL | M | | INTEGER (-100..-50,...) | Average ED Threshold used for DL channel sensing at the gNB. Value is in dBm. | - | | |
| | | | **>> Number of Connected UE** | **O** | | **INTEGER (0..16384, ...)** | **Number of connected UEs in a cell** | - | | |
| | | | **>> Number of DRB** | **O** | | **INTEGER (0..65535, ...)** | **Number of DRBs in a cell** | - | | |
| | **>>Connected UE List** | | | | ***0..1*** | | | **YES** | **ignore** | |
| | | **>>>Connect UEItem** | | | ***1..<maxn oofConn ectedUE>*** | | | - | | |
| | | | **>>>> qNB-DU UE IDF1AP** | **M** | **9.3.1.5** | | | - | | |
| | | | **>>>> qNB-CU UE IDF1AP** | **M** | **9.3.1.4** | | | - | | |
| | | | **>>>> C-RNTI** | **O** | **9.3.1.32** | | | | | |
| | | | **>>>> CHOICESystem** | **O** | | | | **YES** | **reject** | |
| | | | **>>>>> E-UTRAN** | | | | | | | |
| | | | **>>>>>> DRB List** | | ***0 .. 1*** | | | **YES** | **reject** | |
| | | | **>>>>>>> DRB Item** | | ***1 .. <maxnoo*** | | | **EACH** | **reject** | |

| IE/Group Name | | Presence | Range | IE type and reference | Semantics description | | Criticality | | Assigned Criticality | |
|---|---|---|---|---|---|---|---|---|---|---|
| | | | ***fDRBs>*** | | | | | | | |
| | **>>>>>>>> DRB ID** | **M** | | **9.3.1.8** | | | **-** | | | |
| | **>>>>> NG-RAN** | | | | | | | | | |
| | **>>>>>> DRB List** | | ***0..1*** | | | | **YES** | | **reject** | |
| | **>>>>>>> DRB Item** | | ***1 .. <maxnoo tDRBs>*** | | | | **EACH** | | **reject** | |
| | **>>>>>>>> DRB ID** | **M** | | **9.3.1.8** | | | - | | | |
| | **>>>>>>>> S-NSSAI** | **O** | | **9.3.1.38** | | | | | | |
| | **>>>>>>>> Flows Mapped to DRB Item** | | **1 .. <maxnoo fQoSFlo ws>** | | | | - | | | |
| | >>>>>>>>> **QoS** **Flow Identifier** | **M** | | 9.3.1.63 | | | - | | | |

The above-listed range parameters are explained below:

| Range bound | Explanation |
|---|---|
| maxCellingNBDU | Maximum no. cells that can be served by a gNB-DU. Value is 512. |
| maxnoofNR-UChannelIDs | Maximum no. NR-U Channel IDs in a cell. Value is 16. |
| **maxnoofConnectedUE** | **Maximum no. of connected UEs per cell. Value is 16384** |

In the previous section, the RESOURCE STATUS UPDATE is triggered by the DU in response to a preceding initiation of Resource Status Reporting procedure triggered by CU-CP (using RESOURCE STATUS REQUEST). The DU sends the status report periodically as indicated by the Reporting Periodicity in the RESOURCE STATUS REQUEST. In the event the CU-CP is locked or shut down, the UE context may be cleared by the CU-CP and DU. When the CU-CP is unlocked or rebooted, the DU can send the RESOURCE STATUS UPDATE unsolicited to the CU-CP after the F1 setup procedure is completed.

In this section, details of RESOURCE STATUS REQUEST sent by gNB-CU-CP to gNB-CU-UP will be discussed, including new elements proposed to be added according to the present disclosure. As discussed above, RESOURCE STATUS REQUEST message is sent by gNB-CU-CP to gNB-CU-UP to initiate the requested measurement according to the parameters given in the message. The overall structure of RESOURCE STATUS REQUEST message is shown in Table 9 below. In the "Report Characteristics" IE, a third bit is added to enable report Number of Bearer Contexts (among other changes). Changes proposed to the RESOURCE STATUS REQUEST message sent by gNB-CU-CP to gNB-CU-UP are highlighted in **bold** and underlined below:

**TABLE 9**

| IE/Group Name | Presence | Range | IE type and reference | Semantics description | Criticality | |
|---|---|---|---|---|---|---|
| Message Type | M | | 9.3.1.1 | | YES | |
| Transaction ID | M | | 9.3.1.53 | | YES | |
| gNB-CU-CP Measurement ID | M | | INTEGER (1..4095,...) | Allocated by gNB-CU-CP | YES | |
| gNB-CU-UP Measurement ID | C-ifRegistratio nRequestSt op | | INTEGER (1..4095,...) | Allocated by gNB-CU-UP | YES | |
| Registration Request | M | | ENUMERATED(st art, stop, ...) | Type of request for which the resource status is required. | YES | |
| Report Characteristics | C-ifRegistratio nRequestSt art | | BITSTRING (SIZE(32)) | Each position in the bitmap indicates measurement object the gNB-CU-UP is requested to report. First Bit = TNL Available Capacity Ind Periodic, Second Bit = HW Capacity Ind Periodic. | YES | |
| | | | | **Third Bit = Number of Bearer Contexts** | | |
| | | | | **Fourth Bit = Bearer Context Report Periodic** | | |
| | | | | **Fifth Bit = Number of PDU Sessions** | | |
| | | | | **Sixth Bit = Number of DRB Sessions** | | |
| | | | | Other bits shall be ignored by the gNB-CU-UP. | | |
| Reporting Periodicity | O | | ENUMERATED (500ms, 1000ms, 2000ms, 5000ms, 10000ms, 20000ms, 30000ms, 40000ms, 50000ms, 60000ms, 70000ms, 80000ms, 90000ms, 100000ms, 110000ms, 120000ms, ...) | Periodicity that can be used for reporting. Also used as the averaging window length for all measurement object if supported. | YES | |
| **Bearer Context To Report List** | | ***0..1*** | | **Bearer Context list to which the request applies** | | |
| **> Slice To Report List** | | ***1..* maxnoofSli celtems** | | | | |
| **>> PLMN Identity** | **M** | | **9.3.1.7** | | | |
| **>> S-NSSAI** | **O** | | **9.3.1.9** | | | |
| **Connection Time** | **O** | | **INTEGER (1..7200 in secs) or (1..120 in mins)** | **Select connected UEs whose age is greater than or equal to specified connection time** | | |

RESOURCE STATUS UPDATE message is sent by gNB-CU-UP to gNB-CU-CP to report the results of the requested measurement. The overall structure of the RESOURCE STATUS UPDATE message sent by gNB-CU-UP is shown in Table 10 below. Changes proposed to the RESOURCE STATUS UPDATE message are highlighted in **bold** and underlined below, which changes include adding, e.g., "Number of Bearer Contexts" IE, among others.

**TABLE 10**

| IE/Group Name | | | Presence | Range | IE type and reference | Semantics description | Criticality | Assigned Criticality |
|---|---|---|---|---|---|---|---|---|
| Message Type | | | M | | 9.3.1.1 | | YES | ignore |
| Transaction ID | | | M | | 9.3.1.53 | | YES | reject |
| gNB-CU-CP Measurement ID | | | M | | INTEGER (1..4095,...) | Allocated by gNB-CU-CP | YES | reject |
| gNB-CU-UP Measurement ID | | | M | | INTEGER (1..4095,...) | Allocated by gNB-CU-UP | YES | ignore |
| TNL Available Capacity Indicator | | | O | | 9.3.1.72 | | YES | ignore |
| HW Capacity Indicator | | | O | | 9.3.1.73 | | YES | ignore |
| **Number of Bearer Contexts** | | | **O** | | **INTEGER (1.. 4294967295,...)** | | **YES** | **ignore** |
| **Bearer Context List** | | | | ***0..1*** | | | **YES** | **ignore** |
| | **> Bearer Context Item** | | | ***1..<maxn oofBearer Contexts* >** | | | - | |
| | | **>> qNB-CU-UP UE ID E1AP** | **M** | ***9.3.1.5*** | | | **-** | |
| | | **>> qNB-CU-CP UE ID E1AP** | **M** | ***9.3.1.4*** | | | **-** | |
| | | **>> CHOICE System** | **O** | | | | **YES** | **reject** |
| | | **>>> E-UTRAN** | | | | | | |
| | | **>>>> DRB ID** | **M** | | **9.3.1.16** | | | |
| | | **>>> NG-RAN** | | | | | | |
| | | **>>>> PDU Session ID** | **M** | | **9.3.1.21** | | | |
| | **>>>> S-NSSAI** | **M** | | **9.3.1.9** | | | **-** | **-** |
| | **>>>> DRB List** | **O** | ***1..<maxn ootDRBs* >** | | | | | |
| | **>>>>> DRB ID** | **M** | | **9.3.1.16** | | | | |
| | **>>>>> QoS Flow List** | | **1** | | | | **-** | **-** |
| | **>>>>>>QoS Flow Item** | | ***1..<maxn oofQoSFI* ows>** | | | | **-** | **-** |
| | **>>>>>>>QoS Flow Identifier** | **M** | | **9.3.1.24** | | | **-** | **-** |

The above-listed range parameters are explained below:

| Range bound | Explanation |
|---|---|
| maxnoofSPLMNs | Maximum no. of Supported PLMN Ids. Value is 12. |
| maxnoofSliceltems | Maximum no. of signalled slice support items. Value is 1024. |
| **maxnoofBearerContexts** | **Maximum no. of Bearer Contexts. Value is 4294967295** |

It should be noted that CU-UP can also include plmn Id and slice Id in the Resource Status Update message sent towards CU-CP.

In the previous section, the RESOURCE STATUS UPDATE is triggered by the CU-UP in response to a preceding initiation of Resource Status Reporting procedure triggered by CU-CP (using RESOURCE STATUS REQUEST). The CU-UP sends the status report periodically as indicated by the Reporting Periodicity in the RESOURCE STATUS REQUEST. In the event the CU-CP is locked or shut down, the UE context may be cleared by the CU-CP and CU-UP. When the CU-CP is unlocked or rebooted, the CU-UP can send the RESOURCE STATUS UPDATE unsolicited to the CU-CP after the F1 setup procedure is completed.

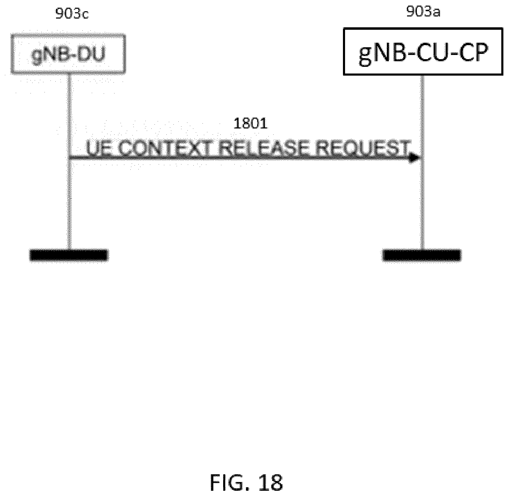

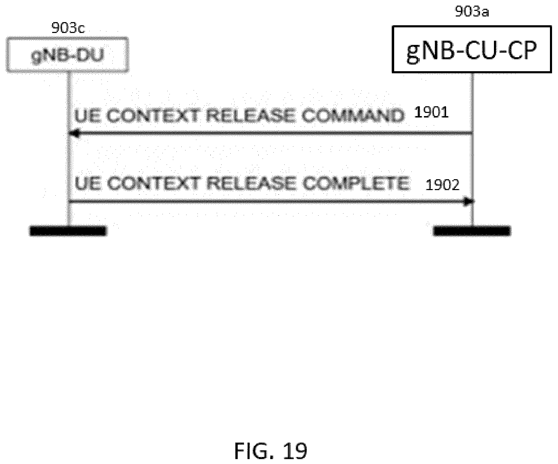

Method 3 (node-level native autonomous clean-up): In another example embodiment of the method according to the present disclosure, the DU 903c sends the UE CONTEXT RELEASE REQUEST 1801 to the CU-CP 903a (as shown in FIG. 18) to release the UE-associated logical F1-connection. The UE CONTEXT RELEASE REQUEST 1801 also includes a cause. In response, the CU-CP 903a initiates the UE CONTEXT RELEASE by sending UE CONTEXT RELEASE COMMAND 1901 to the DU 903c, as shown in FIG. 19. The DU 903c subsequently sends UE CONTEXT RELEASE COMPLETE message 1902 to gNB-CU-CP 903a to report the completion of the UE context release.

In the above-described procedure, there is no retry mechanism if the CU-CP does not initiate the UE Context Release Command in response to receiving the UE Context Release Request from the DU. The DU can start a timer upon sending the UE Context Release Request. If the UE Context Release is initiated by the CU-CP, i.e., the UE Context Release Command is sent, the DU stops the timer upon receiving the UE Context Release Command from the CU-CP. However, if the timer expires and the UE Context Release Command is not received at the DU, the DU initiates another UE Context Release Request and increments the retry count. The DU initiates the retry (i.e., sends the UE Context Release Request) for a configured (specified) number of times (counts). In the event the configured retry count is reached and the CU-CP fails to initiate the UE Context Release, the DU autonomously cleans up the UE context.

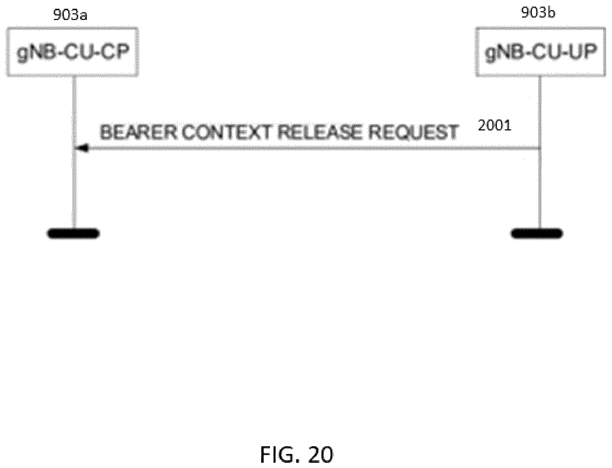

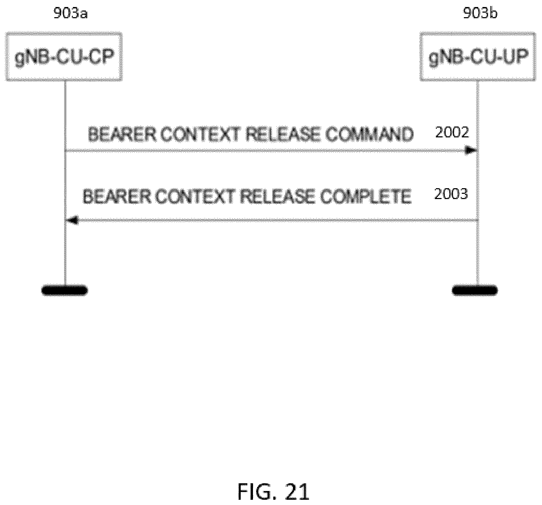

As shown in FIG. 20, the CU-UP 903b sends the Bearer Context Release Request 2001 to CU-CP 903a to release the UE-associated logical E1-connection. The Bearer Context Release Request 2001 also includes a cause. In response to receiving the Bearer Context Release Request from the CU-UP 903b, the CU-CP 903a initiates the Bearer Context Release procedure by sending the Bearer Context Release Command 2002, as shown in FIG. 21. The CU-UP 903b subsequently sends Bearer Context Release Complete message 2003 to gNB-CU-CP 903a to report the completion of the bearer context release.

In the above-described procedure, there is no retry mechanism if the CU-CP 903a does not initiate the Bearer Context Release procedure (by sending the Bearer Context Release Command 2002) in response to receiving the Bearer Context Release Request 2001 from the CU-UP 903b. In an example embodiment, the CU-UP 903b can start a timer upon sending the Bearer Context Release Request 2001. If the Bearer Context Release procedure is initiated by the CU-CP 903a, i.e., the Bearer Context Release Command 2002 is sent, the CU-UP 903b stops the timer upon receiving the Bearer Context Release Command 2002 from the CU-CP 903a. However, if the timer expires and the Bearer Context Release Command 2002 is not received, the CU-UP 903b initiates another Bearer Context Release Request 2001 and increments the retry count. The CU-UP 903b initiates the retry (i.e., sends the Bearer Context Release Request) for a configured (specified) number of times (counts). In the event the configured retry count is reached and the CU-CP 903a fails to initiate the Bearer Context Release procedure, the CU-UP 903b autonomously cleans up the bearer context.

While the present disclosure has been described with reference to one or more exemplary embodiments, it will be understood by those skilled in the art that various changes may be made and equivalents may be substituted for elements thereof without departing from the scope of the present disclosure. For example, although the example methods have been described in the context of 5G cellular networks, the example methods are equally applicable for 4G, 6G and other similar wireless networks. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

For the sake of completeness, a list of abbreviations used in the present specification is provided below:
5GC: 5G Core Network
5G NR: 5G New Radio
5QI: 5G QoS Identifier
ACK: Acknowledgement
AM: Acknowledged Mode
APID: Application Protocol Identity
APN: Access Point Name
ARP: Allocation and Retention Priority
BS: Base Station
BWP: Bandwidth Part
CG: Configured grant
CGI: Cell Global Identifier
CHO: Conditional Handover
CP: Control Plane
CSI-RS: Channel State Information Reference Signal
CU: Centralized Unit
CU-CP: Centralized Unit - Control Plane
CU-UP: Centralized Unit - User Plane
C-RNTI: Cell Radio Network Temporary Identifier
DL: Downlink
DDDS: DL Data Delivery Status
DNN: Data Network Name
DRB: Data Radio Bearer
DU: Distributed Unit
eNB: evolved NodeB
E1AP ID : E1 Application Protocol Identifier
EPC: Evolved Packet Core
F1AP ID : F1 Application Protocol Identifier
GBR: Guaranteed Bit Rate
gNB: gNodeB
GTP-U: GPRS Tunneling Protocol - User Plane
IP: Internet Protocol
I-RNTI: Inactive Radio Network Temporary Identifier
L1: Layer 1
L2: Layer 2
L3: Layer 3
LC: Logical Channel
MAC: Medium Access Control
MR-DC: Multi RAT Dual Connectivity
NACK: Negative Acknowledgement
NAS: Non-Access Stratum
NG-RAN: Next Generation Radio Access Network
NR-U: New Radio - User Plane
O-RAN: Open Radio Access Network
PDB: Packet Delay Budget
PDCCH: Physical Downlink Control Channel
PDCP: Packet Data Convergence Protocol
PDSCH: Physical Downlink Shared Channel
PDU: Protocol Data Unit
PHY: Physical Layer
PLMN: Public Land Mobile Network
PRB: Physical Resource Block
PUCCH: Physical Uplink Control Channel
PUSCH: Physical Uplink Shared Channel
QCI: QoS Class Identifier
QFI: QoS Flow Identifier
QoS : Quality of Service
RAN: Radio Access Network
RAT: Radio Access Technology
RB: Resource Block
RDI: Reflective QoS Flow to DRB Indication
RLC: Radio Link Control
RLC-AM: RLC Acknowledged Mode
RLC-UM: RLC Unacknowledged Mode
RQI: Reflective QoS Indication
RRC: Radio Resource Control
RRM: Radio Resource Management
RTP: Real-Time Transport Protocol
RTCP: Real-Time Transport Control Protocol
RU: Radio Unit
SCS: Sub Carrier Spacing
SCTP: Stream Control Transmission Protocol
SDAP: Service Data Adaptation Protocol
SPS: Semi-Persistent Scheduling
SP-CSI: Semi-Persistent Channel State Information
TCP: Transmission Control Protocol
TEID: Tunnel Endpoint Identifier
UE: User Equipment
UP: User Plane
UL: Uplink
UM: Unacknowledged Mode
UPF: User Plane Function

## Claims

1. A method for detecting resource allocation mismatch among different nodes in a radio access network (RAN), comprising:
obtaining, by a radio intelligent controller (RIC), network information related to at least one of i) allocated RAN resources associated with a user equipment (UE), ii) a user equipment (UE) context for a UE, and iii) the number of UEs connected at a centralized unit control plane (CU-CP) and the number of UEs connected at a distributed unit (DU); and
determining, by the RIC, whether at least one of stale RAN resource allocation and stale UE context exists, based on the obtained network information.

2. The method of claim 1, wherein:
the obtaining of the network information comprises:
polling, by the RIC, the different nodes of the RAN including the CU-CP, centralized unit user plane (CU-UP), and the DU to obtain information about allocated RAN resources associated with the UE, wherein the allocated RAN resources include at least one of UE context, protocol data unit (PDU) session, data radio bearer (DRB), and quality of service (QoS) flow; and
receiving, by the RIC from each of the CU-CP, CU-UP and DU, information regarding the allocated RAN resources associated with the UE.

3. The method of claim 2, wherein:
the determining of whether stale RAN resource allocation exists comprises:
correlating, by the RIC, the received information regarding the allocated RAN resources associated with the UE to determine whether the CU-CP, CU-UP and DU are in sync with respect to the allocated RAN resources associated with the UE, wherein a discrepancy in the allocated RAN resources among the CU-CP, CU-UP and DU indicates stale RAN resource allocation by at least one of the CU-CP, CU-UP and DU.

4. The method of claim 3, further comprising:
sending, by the RIC, a trigger to at least one of the CU-CP, CU-UP and DU to delete the stale RAN resource allocation.

5. The method of claim 4, wherein:
the allocated RAN resources are UE contexts; and
the RIC is a non-real time RIC (Non-RT RIC).

6. The method of claim 1, wherein:
the obtaining of the network information comprises:
monitoring, by the RIC, network trace data for network signaling messages to determine whether a UE context for a UE exists; and
in the case the UE context exists, monitoring, by the RIC, at least one of signaling activity and user plane activity of the UE.

7. The method of claim 6, wherein the monitoring of the network trace data by the RIC comprises monitoring the different nodes of the RAN including the CU-CP, centralized unit user plane (CU-UP), and the DU.

8. The method of claim 7, wherein:
the determining of whether a stale UE context exists comprises:
categorizing, by the RIC, the UE as having a stale UE context in the case the at least one of signaling activity and user plane activity of the UE is not observed for a predefined time period.

9. The method of claim 1, wherein:
the obtaining of the network information comprises:
receiving, by the RIC, performance measurement (PM) measurement counts indicating at least the number of UEs connected at the CU-CP and the number of UEs connected at the DU.

10. The method of claim 8, wherein:
the determining of whether stale RAN resource allocation exists comprises:
determining, by the RIC, an existence of stale RAN resource allocation in the case the number of UEs connected at the CU-CP differs from the number of UEs connected at the DU.

11. The method of claim 1, wherein:
the determining of whether stale RAN resource allocation exists comprises:
determining, by the RIC, an existence of stale RAN resource allocation based on at least one of UE context allocation information and UE context release information received from at least one of the CU-CP, a centralized unit user plane (CU-UP), and the DU.

12. The method of claim 1, further comprising at least one of:
a) sending, by the CU-CP, a RESOURCE STATUS REQUEST message to the DU to configure the DU to report information regarding UEs connected at the DU; and
b) sending, by the CU-CP, a RESOURCE STATUS REQUEST message to the centralized unit user plane (CU-UP) to configure the CU-UP to report information regarding the number of bearer contexts.

13. The method of claim 12, further comprising at least one of:
a) sending, by the DU, a RESOURCE STATUS RESPONSE to the CU-CP indicating the capability to report the requested information regarding UEs connected at the DU; and
b) sending, by the CU-UP, a RESOURCE STATUS RESPONSE to the CU-CP indicating the capability to report the requested information regarding the number of bearer contexts.

14. The method of claim 13, further comprising at least one of:
a) sending, by the DU, a RESOURCE STATUS UPDATE to the CU-CP including the number of connected UEs per cell; and
b) sending, by the CU-UP, a RESOURCE STATUS UPDATE to the CU-CP including the number of bearer contexts.

15. The method of claim 14, wherein at least one of:
a) DU sends the RESOURCE STATUS UPDATE to the CU-CP based on a predefined event including at least the number of connected UEs exceeding a predefined threshold percentage of maximum number of users supported by the cell; and
b) CU-UP sends the RESOURCE STATUS UPDATE to the CU-CP based on a predefined event including at least the number of data radio bearers (DRBs) exceeding a predefined threshold percentage of maximum number of DRBs supported by the CU-UP.

16. The method of claim 14, further comprising at least one of:
a) in the case the number of connected UEs per cell reported by the DU differs by a predefined threshold from the information stored at the CU-CP regarding the number of connected UEs per cell, the CU-CP configures CONNECTED UE REPORT PERIODIC measurement object for the DU, whereby information available at the DU about every connected UE will be reported by the DU; and
b) in the case the number of bearer contexts reported by the CU-UP differs by a predefined threshold from the information stored at the CU-CP regarding the number of bearer contexts, the CU-CP configures BEARER CONTEXT REPORT PERIODIC measurement object for the CU-UP, whereby information available at the CU-UP about every connected UE will be reported by the CU-UP.

17. The method of claim 16, further comprising:
comparing, by the CU-CP, the information received from the DU and the CU-UP about every connected UE with information stored at the CU-CP regarding UE contexts.

18. The method of claim 1, further comprising:
in the case a stale UE context exists, performing a cleanup of the stale UE context by:
i) sending, by the DU, a UE Context Release Request to the CU-CP;
ii) in the case a UE Context Release Command from the CU-CP is received at the DU within a specified time period after the sending of the UE Context Release Request, sending, by the DU, a UE Context Release Complete message to the CU-CP;
iii) in the case the UE Context Release Command from the CU-CP is not received at the DU within the specified time period after the sending of the UE Context Release Request, repeating step i);
iv) repeating step iii) up to a specified number of retries; and
v) in the case the UE Context Release Command from the CU-CP is not received at the DU after the specified number of retries, cleaning up the stale UE context by the DU.
